# EUROPEAN PATENT APPLICATION

(11) **EP 1 841 220 A2**
(43) Date of publication of application: **03.10.2007**
(21) Application number: 06253882.2
(22) Date of filing: 25.07.2006
(51) Int. Cl.: H04N 5/445

(54) **Electronic apparatus, information browsing method thereof, and storage medium**

(30) Priority: 31.03.2006 JP 2006100519
(71) Applicant: FUJITSU LIMITED, Kawasaki-shi, Kanagawa 211-8588 (JP)
(72) Inventor: Yamada, Takuma, c/o Fujitsu Limited, Kawasaki-shi Kanagawa 211-8588 (JP)
(74) Representative: Wilding, Frances Ward

(57) **Abstract**

Selection of broadcast programs is facilitated by giving and receiving viewer information relating to program information and improving the sharing of the viewer information among viewers. The present invention is an electronic apparatus (TV apparatus 4) that includes a function for receiving broadcast programs of a television receiver, etc., and the electronic apparatus enables the browsing of the program information and the viewer information at the same time by receiving the viewer information provided from a server apparatus and adding and displaying the viewer information on electronic program information to facilitate the selection for viewing and recording the broadcast programs and optimize the program selection.

## Description

### CROSS-REFERENCE TO RELATED APPLICATIONS

This application is based upon and claims the benefit of priority from the prior Japanese Patent Application No. 2006-100519, filed on March 31, 2006, the entire contents of which are incorporated herein by reference.

### BACKGROUND OF THE INVENTION

### 1. Field of the Invention

The present invention relates to sharing of viewer information relating to a broadcast program provided through a server apparatus from viewers and, particularly, relates to an electronic apparatus such as television reception apparatus, an information browsing method thereof, and a storage medium storing an information browsing program that constitute a client apparatus for a server apparatus collecting viewer information relating to a broadcast program, that include a broadcast reception function for television (hereinafter, "TV") broadcast, etc., and that can perform transmission and reception of viewer information relating to a broadcast program and a tabulation process thereof.

### 2. Description of the Related Art

An electronic program guide (EPG) function is added to a TV reception apparatus, a recording apparatus such as DVD (Digital Versatile Disk)/HDD (Hard Disk Drive) recorder, and an electronic apparatus such as a personal computer (PC) with a TV reception function, and the EPG function enables selection of broadcast programs, introduction of broadcast programs, recording reservations, etc.

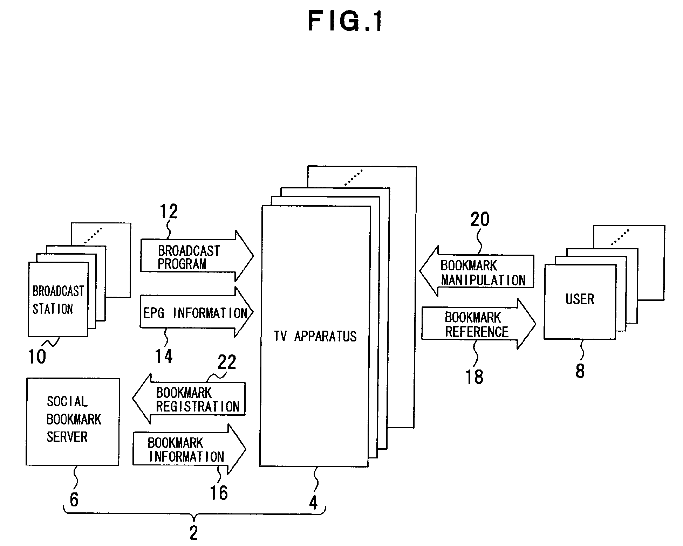

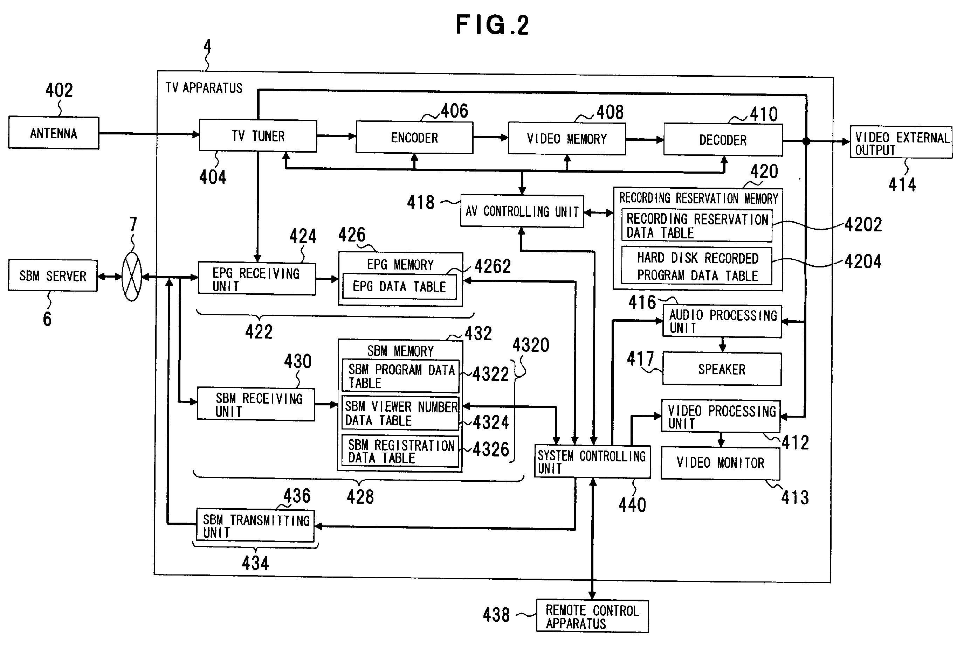

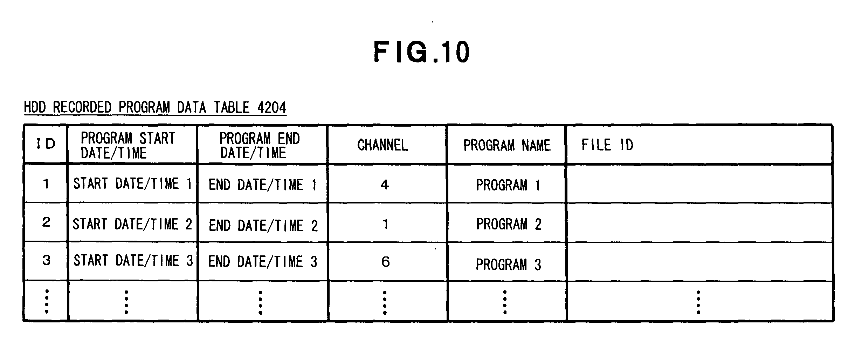

With regard to the selection of broadcast programs, provision of the selection information, etc., in the disclosure of Japanese Patent Application Laid-Open Publication No. 2004-128795, based on information uploaded by viewers, statistical data are obtained for representing the number of viewers, a viewer rate, the number of recording reservations, likability, etc. to generate an EPG page overlapping the statistical data with program guide data (paragraph Nos. 0058, 0061, Fig. 10, etc.). In the disclosure of Japanese Patent Application Laid-Open Publication No. 2002-290996, the number of viewers is counted by acquiring channel information from a viewer terminal and the number of quotes of viewers is counted for each program to display evaluation of a program on the viewer terminal based on the number of viewers and the number of quotes (paragraph Nos. 0021 to 0029, Fig. 2, etc.). In the disclosure of Japanese Patent Application Laid-Open Publication No. 2000-59745, the need for evaluation items is calculated based on a ratio of the accumulated number of evaluation items included in program information of a viewed program to the accumulated number of evaluation items included in the program information of the broadcast program where items included in the program information are the evaluation items, and the necessity degree for each evaluation item included in the program information is summed to quantitatively calculate the degree of user preference indicated by the program information (paragraph Nos. 0032 to 0035, Fig. 1, etc.)

By the way, although popularity among viewers, a match of interest in broadcast programs, etc. may be valuable selection information for viewing and recording broadcast programs, when an effort to introduce a program is needed in addition to an effort to view or record the program, practicality is reduced if a small amount of information is provided from viewers.

Although the viewer rate research and the program access research for HDD/DVD recorders are known, when viewers are handled collectively throughout Japan, preferences of individual viewers are less reflected and human relations cannot be considered.

Since the program recommendation and the automatic recording function of HDD/DVD recorders utilizing the EPG are based only on provided data and behavior of a user of the apparatus, it is problematic that the inspection and report cannot be performed based on human relations.

In the case of a recorder that records all of a multiplicity of channels, a large capacity is required to store recording data and a problem of short storage period is not negligible.

Japanese Patent Application Laid-Open Publication Nos. 2004-128795, 2002-290996, and 2000-59745 do not indicate or disclose such problems and do not disclose or indicate a configuration, etc. for solving the problems.

### SUMMARY OF THE INVENTION

An object of the present invention is to achieve facilitation of the selection of broadcast programs by collecting viewer information relating to program information and by improving the sharing of the viewer information among viewers.

Another object of the present invention is to achieve optimization of the selection of broadcast programs by collecting the viewer information relating to program information and by improving the sharing of the viewer information among viewers.

The present invention provides an electronic apparatus that constitutes a client apparatus for a server apparatus including a function for collecting viewer information, and the electronic apparatus includes a function for receiving broadcast programs of a television receiver, etc., and enables browsing of program information and the viewer information at the same time by receiving the viewer information provided from a server apparatus and adding and displaying the viewer information on electronic program information to facilitate selection for viewing and recording broadcast programs and optimize the program selection.

To achieve the above object, a first aspect of the present invention provides an electronic apparatus that includes a function for viewing or recording television broadcast, and the electronic apparatus is constituted by including a receiving unit that receives viewer information added to program information and a displaying unit that displays the viewer information received by the receiving unit. According to such a configuration, the viewer information added to the program information is received by the receiving unit and the program information can be displayed on the displaying unit along with the viewer information acquired by the receiving unit. As a result, the viewer information can be shared among viewers and a broadcast program can be selected with reference to the viewer information to facilitate and optimize the selection.

Preferably, the electronic apparatus may include a processing unit that performs a process for adding and displaying the viewer information provided from viewers on electronic program information displayed on the displaying unit. According to such a configuration, the viewer information can be provided from the electronic apparatus to a server, etc. and the viewer information can be shared.

Preferably, the electronic apparatus may include a processing unit that selects a user correlated with the viewer information from users providing the viewer information relating to the program information to create friend information. By selecting the user correlated with the viewer information, the friend information is generated which represents a user viewing a common broadcast program. According to such a configuration, the above purpose is achieved as well.

Preferably, the electronic apparatus may include a transmitting unit that transmits the viewer information that should be added to the program information. According to such a configuration, the electronic apparatus can transmit the viewer information that should be added to the broadcast program and the viewer information transmitted from each user can be collected. According to such a configuration, the above purpose is achieved as well.

Preferably, the electronic apparatus may include an electronic program information storing unit that stores the received electronic program information and a viewer information storing unit that stores the received viewer information. According to such a configuration, the received viewer information can be stored in the viewer information storing unit to utilize the stored information. According to such a configuration, the above purpose is achieved as well.

Preferably, in the electronic apparatus, the viewer information may include one or more of a performer of a broadcast program, a program name, a program category, a comment of a viewer, a user providing viewer information relating to a broadcast program, and the number of users and the above purpose is achieved as well according to such a configuration.

Preferably, in the electronic apparatus, the viewer information may include tag information that identifies a performer of a broadcast program, a program name, or a program category and the above purpose is achieved as well according to such a configuration.

To achieve the above object, the electronic apparatus may comprise an input unit that inputs the viewer information relating to the broadcast program.

To achieve the above object, a second aspect of the present invention provides an information browsing method of an electronic apparatus that includes a function for viewing or recording television broadcast, and the method includes the steps of receiving viewer information added to program information and displaying the received viewer information. According to such a configuration, the above purpose is achieved as well.

Preferably, the information browsing method of the electronic apparatus may include the step of adding and displaying the viewer information provided from viewers on electronic program information. According to such a configuration, the above purpose is achieved as well.

To achieve the above object, the information browsing method of the electronic apparatus may comprise the step of selecting a user correlated with the viewer information from users providing the viewer information relating to the program information to create friend information.

The information browsing method of the electronic apparatus may comprise the step of transmitting the viewer information that should be added to the program information.

To achieve the above object, a third aspect of the present invention provides a computer-readable storage medium storing an information browsing program of an electronic apparatus that includes a function for viewing or recording television broadcast (or a computer program product), the program is executed by a computer and includes the steps of receiving viewer information added to program information and displaying the received viewer information. According to such a configuration, the above purpose is achieved as well.

To achieve the above object, in the storage medium, the information browsing program of the electronic apparatus may comprise the step of adding and displaying the viewer information provided from viewers on electronic program information.

The information browsing program of the electronic apparatus may comprise the step of selecting a user correlated with the viewer information from users providing the viewer information relating to the program information to create friend information.

The information browsing program of the electronic apparatus may comprise the step of transmitting the viewer information that should be added to the program information.

The features and advantages of the present invention are listed as follows.
(1) The selection of the broadcast programs can be facilitated by giving and receiving the viewer information relating to the program information and improving the sharing of the viewer information among viewers.
(2) The selection of the broadcast programs can be optimized by giving and receiving the viewer information relating to the program information and improving the sharing of the viewer information among viewers.
(3) When using the present invention, a user can easily learn a popular program among all users on the EPG, can select to view the popular program, and can easily learn a popular program among friends rather than all users on the EPG.
(4) The viewer information can be used to check every broadcast programs of the same theme and a user can join the program recommendation and evaluation activities of users through the viewer information.

The above and other objects, aspects, features, and advantages of the present invention will become more apparent from the following detailed description of the presently preferred embodiments when taken in conjunction with the accompanying drawings.

### BRIEF DESCRIPTION OF THE DRAWINGS

Fig. 1 shows a collecting/browsing system for broadcast information;
Fig. 2 shows a configuration example of a TV apparatus;
Fig. 3 shows a configuration example of a system controlling unit;
Fig. 4 shows a configuration example of an SBM server;
Fig. 5 shows a configuration example of a server controlling unit;
Fig. 6 shows user information data;
Fig. 7 shows broadcast channel information;
Fig. 8 shows an EPG data table;
Fig. 9 shows a recording reservation data table;
Fig. 10 shows an HDD-recorded program data table;
Fig. 11 shows an SBM program data table;
Fig. 12 shows an SBM viewer number data table;
Fig. 13 shows a master DB of viewing/reservation information;
Fig. 14 shows an explanation of each term;
Fig. 15 shows a broadcast station program DB;
Fig. 16 shows a program viewer DB;
Fig. 17 shows a network program DB;
Fig. 18 shows a friend list DB (automatic extraction);
Fig. 19 shows a friend list DB (manual registration);
Fig. 20 is a flowchart of a process procedure of an AV system process;
Fig. 21 is a flowchart of a process procedure of a viewing transmission system process;
Fig. 22 is a flowchart of a process procedure of an EPG acquisition process;
Fig. 23 is a flowchart of a process procedure of a user manipulation process (recording transmission system process);
Fig. 24 is a flowchart of a process procedure of server transmission (recording);
Fig. 25 is a flowchart of a process procedure of a viewing transmission system process;
Fig. 26 is a flowchart of a process procedure of server transmission (viewing);
Fig. 27 is a flowchart of a process procedure of a reservation information accumulation process;
Fig. 28 is a flowchart of a process procedure of a similar user extraction process;
Fig. 29 is a flowchart of a process procedure of a viewer data update (server) process;
Fig. 30 is a flowchart of a process procedure of a program information providing process;
Figs. 31A to 31C show process timing of an automatic SBM registration process;
Figs. 32A to 32C show transmission timing during EPG display;
Figs. 33A to 33C show transmission timing during a recording reservation;
Figs. 34A to 34C show transmission timing during execution of the recording;
Fig. 35 shows a process procedure of a tag registration process;
Fig. 36 shows a process procedure of a bookmark reference;
Fig. 37 is a flowchart of an operation based on a user manipulation on a detail information screen;
Fig. 38 is a flowchart of a process procedure for a series recording reservation of programs;
Fig. 39 is a flowchart of display and input of comments on a program;
Fig. 40 is a flowchart for a list of programs with tags bookmarked;
Fig. 41 is a flowchart for an EPG screen;
Fig. 42 is a flowchart for a list of bookmarked programs;
Fig. 43 shows an EPG screen;
Figs. 44A and 44B show automatic recording;
Fig. 45 shows a bookmark-registered program;
Fig. 46 shows an EPG screen;
Fig. 47 shows a screen corresponding to a selected program category;
Fig. 48 shows a flowchart of a process procedure of a reception process for the SBM registration in the SBM server;
Fig. 49 shows a flowchart of a process procedure of a bookmark registration process;
Fig. 50 is a flowchart of a process procedure of normalizing each local ID, channel, and broadcast station name;
Fig. 51 is a flowchart of a process procedure of a tabulation process;
Fig. 52 is a flowchart of a process procedure of detecting network programs;
Fig. 53 is a flowchart of a process procedure of detecting time-difference broadcast of a network program;
Fig. 54 is a flowchart of a process procedure of detecting a series program;
Fig. 55 is a flowchart of a process procedure of creating a broadcast station/number of program comment/summary table for number of viewer;
Fig. 56 shows a process of addition to the bookmark registration;
Fig. 57 is a flowchart of a process procedure of a bookmark reference response process of the SBM server;
Figs. 58A and 58B shows a process of transmitting program data within a specified range collectively;
Fig. 59 is a flowchart of a process procedure of a process for checking and normalizing the local ID, channel, and broadcast station name;
Fig. 60 is a flowchart of a process procedure of a process for referring to the broadcast station program table;
Fig. 61 shows a process of tabulating the number of registrations for each performer;
Fig. 62 is a flowchart of a process procedure of a friend bookmark reference response process of the SBM server;
Fig. 63 shows a process of referencing an SBM registration data table;
Figs. 64A and 64B show a process of referencing the SBM registration data table; and
Fig. 65 shows a process of answering with information identifying programs and user IDs and tags/comments.

### DETAILED DESCRIPTION OF THE PREFERRED EMBODIMENTS

An embodiment of the present invention will be described with reference to Fig. 1. Fig. 1 shows a collecting/browsing system of broadcast information according to the embodiment.

This collecting/browsing system 2 for broadcast information includes a plurality of television reception apparatuses (hereinafter, "TV apparatuses") 4 that are an example of electronic apparatuses with a broadcast reception function for TV broadcast, etc. and a social bookmark server (hereinafter, "SBM server") 6, and the TV apparatuses 4 and the SBM server 6 are connected by a network such as the Internet. In this case, the TV apparatus 4 is a client apparatus for the SBM server 6 and is disposed correspondingly to each user 8 that is a viewer to receive broadcast programs 12 and EPG information 14 from a single or a plurality of broadcast stations 10. The broadcast station 10 is a broadcast provider of public broadcast or commercial broadcast for a multiplicity of viewers, i.e., users. The broadcast program 12 is a program provided in the broadcast. The EPG information 14 is information relating to an electronic program guide function. The social bookmark (SBM) is viewer information that is the viewers' shared information relating to programs. The SBM server 6 performs the collecting process and display process of the viewer information relating to program information representing the broadcast programs.

In this embodiment, SBM registration information includes user ID, local ID, program start date/time, program end date/time, channel, broadcast station name, program name, program category, tag and comment, etc. The user ID is identification information that identifies a user such as a viewer, and the local ID is identification information that identifies a viewing area since the same program may have a different channel number or broadcast station name depending on a broadcasting area. The program start date/time is time information representing a date and time when a program starts and the program end date/time is time information representing a date and time when a program ends. The channel is a broadcast channel number set to a broadcast station of that area. The program category is a type of broadcast contents, such as news, drama, variety, etc.

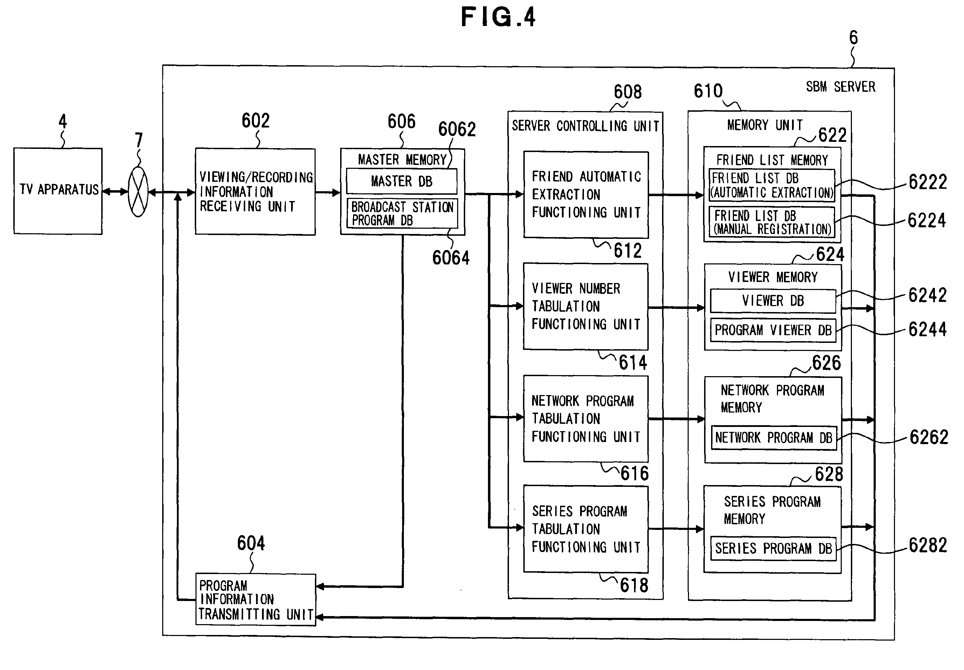

The collecting/browsing system 2 displays bookmark information 16 (bookmark information feeding) provided from the SBM server 6 (Fig. 4) on an EPG screen of the TV apparatus 4 (Fig. 2) in association with the broadcast program 12 and the EPG information 14, and the user 8 can perform bookmark registration (bookmark posting) 22 from the TV apparatus 4 to the SBM server 6 based on bookmark reference (bookmark browsing/viewing/watching) 18 and manipulation (user operation) 20.

A user 8 is a viewer of TV broadcast, etc. and utilizes SBM registration and browsing functions through the EPG screen. In this case, the explicit bookmark manipulation is registered into the SBM server 6 through the TV apparatus 4 as needed in accordance with the manipulation of the user 8. The TV apparatus 4 of the user 8 is notified of the process result of the SBM server 6. The TV apparatus 4 utilizes the aforementioned SBM when:
a) selecting and viewing a program that is being broadcasted;
b) selecting, and performing recording reservation of, a future program; and
c) referring to information of, and reproducing recorded data of, a broadcasted program.

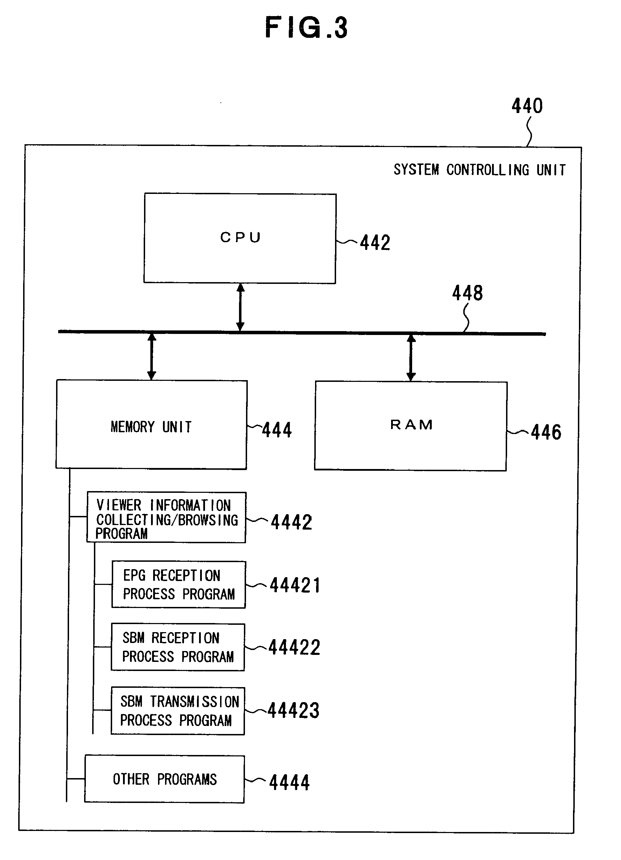

The TV apparatus 4 will be described with reference to Figs. 2 and 3. Fig. 2 shows a configuration example of the TV apparatus 4 in the collecting/browsing system 2 for the broadcast information and Fig. 3 shows a configuration example of a system controlling unit. In Figs. 2 and 3, the same symbols are added to the same portions as Fig. 1.

As shown in Fig. 2, the TV apparatus 4 includes an antenna 402; the broadcast received through the antenna 402 is input to a TV tuner 404; an encoder 406 encodes and compresses video information including audio information from the broadcast electric waves; the compressed video information is stored in a video memory 408; the original video information is recovered with a decoder 410 from the compressed video information read from the video memory 408; the original video information is input to a video processing unit 412 and is picked up as a video external output 414; and in this case, the audio information is input to an audio processing unit 416. The video is acquired from a video monitor 413 connected to the video processing unit 412 and the sound is acquired from a speaker 417 connected to the audio processing unit 416.

An audio/video (AV) controlling unit 418 controls the TV tuner 404, the encoder 406, the video memory 408, and the decoder 410; a recording reservation data table 4202 and a hard disk (HDD) recorded program data table 4204 are defined in a recording reservation memory 420 connected to the AV controlling unit 418; the recording reservation data table 4202 stores program information identifying the broadcast program 12 that should be recorded; and the HDD recorded program data table 4204 stores the recorded program information. In this case, the program information is information representing the broadcast station 10, the broadcast time of the program, the program code, etc.

An EPG system 422 processes the electronic program information included in the broadcast and is disposed with receiving/storing units of the program information, for example, an EPG receiving unit 424 and an EPG memory 426. The EPG receiving unit 424 captures the EPG signal from the TV tuner 404 to demodulate the EPG information. An EPG data table 4262 is defined in the EPG memory 426 to store the EPG information.

An SBM display system 428 performs a display process of the SBM information distributed from the SBM server 6 and is disposed with receiving/storing units of the viewer information, for example, an SBM receiving unit 430 and an SBM memory 432. The SBM receiving unit 430 captures the SBM signal distributed from the SBM server 6 through a network 7 such as the Internet and demodulates the SBM information from the SBM signal. An SBM table 4320 is defined in the SBM memory 432 to store the SBM information. The SBM table 4320 includes an SBM program data table 4322, an SBM viewer number data table 4324, and an SBM registration data table 4326; the SBM program data table 4322 stores SBM program information; the SBM viewer number data table 4324 stores the number of SBM viewers; and the SBM registration data table 4326 stores bookmark registration information.

An SBM transmission system 434 performs a transmission process of the SBM information to the SBM server 6 and is disposed with an SBM transmitting unit 436. The SBM information input from a remote control apparatus 438 is input to the SBM transmitting unit 436 through a processing unit for various pieces of information, for example, a system controlling unit 440, and is then processed and transmitted to the SBM server 6.

The system controlling unit 440 is constituted by a computer and performs a communication process, etc. for processing and collecting data. As shown in Fig. 3, the system controlling unit 440 includes a CPU (Central Processing Unit) 442, a memory unit 444, a RAM (Random-Access Memory) 446, etc. and is constituted by connecting these components with a bus 448. The CPU 442 executes a viewer information collecting/browsing program 4442 stored in the memory unit 444. The memory unit 444 stores the operating system (OS), the viewer information collecting/browsing program 4442, and other programs 4444, and the viewer information collecting/browsing program 4442 includes an EPG reception process program 44421, an SBM reception process program 44422, and an SBM transmission process program 44423. The memory unit 444 is constituted by, for example, a storage medium such as a nonvolatile memory and a hard disk apparatus and may be used also as other memories 420, 426, 432. The RAM 446 is used as a work area.

The system controlling unit 440 communicates with the remote control apparatus 438 to perform writing/reading to/from the EPG memory 426, writing/reading to/from the SBM memory 432, and control of the AV controlling unit 418, the audio processing unit 416, the video processing unit 412, etc., and displays bookmarks, tags, etc. on the EPG image displayed on the display screen of the video monitor 413 through such control.

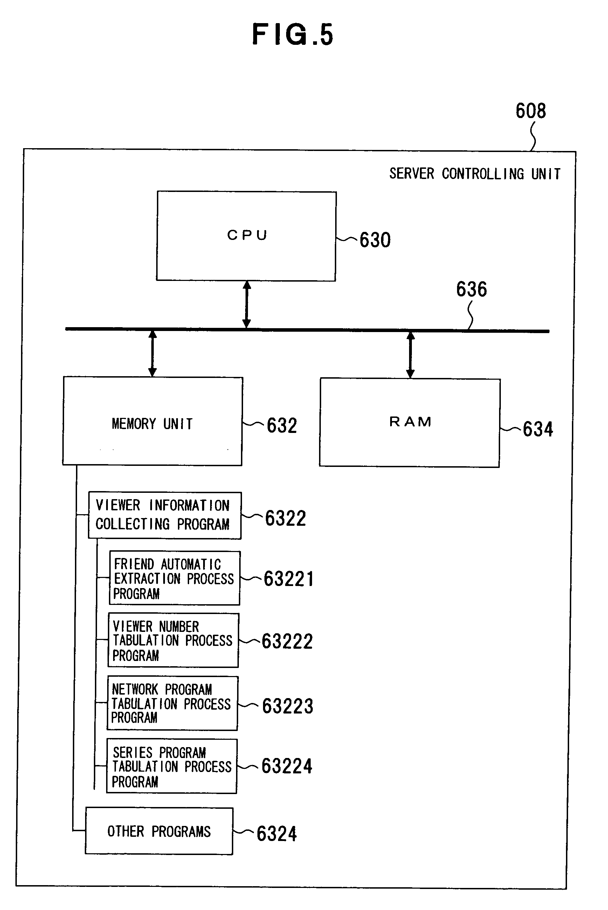

The SBM server 6 will be described with reference to Figs. 4 and 5. Fig. 4 shows a configuration example of the SBM server 6 in the collecting/browsing system 2 for the broadcast information and Fig. 5 shows a configuration example of a server controlling unit. In Figs. 4 and 5, the same symbols are added to the same portions as Fig. 1.

As shown in Fig. 4, the SBM server 6 includes a viewing/recording information receiving unit 602, a program information transmitting unit 604, a master memory 606 that is a first storing unit, a server controlling unit 608 that is an information processing unit, and a memory unit 610 that is a second storing unit. The viewing/recording information receiving unit 602 receives viewing/recording information transmitted through the network 7 such as the Internet from each TV apparatus 4 and the program information transmitting unit 604 transmits the program information through the network 7 such as the Internet to each TV apparatus 4. The master memory 606 is constituted by a storage apparatus such as a hard disk apparatus, and a master DB 6062 and a broadcast station program DB 6064 are established to store various pieces of viewer information and the broadcast station program information, etc. The server controlling unit 608 controls the information storage, etc. of the memory unit 610. The memory unit 610 is constituted by a storage apparatus such as a hard disk apparatus, stores information relating to the broadcast and the programs provided from the broadcast stations 10, and stores the information provided from viewers and the SBM information. The master memory 606 and the memory unit 610 may be constituted by a common storage apparatus.

The server controlling unit 608 defines a friend automatic extraction functioning unit 612, a viewer number tabulation functioning unit 614, a network program tabulation functioning unit 616, and a series program tabulation functioning unit 618. The friend automatic extraction functioning unit 612 automatically extracts friend information stored in a friend list memory 622. The viewer number tabulation functioning unit 614 tabulates the number of the viewers stored in a viewer memory 624 and writes/reads information to/from the viewer memory 624. The network program tabulation functioning unit 616 tabulates network program (program broadcasted simultaneously nationwide) information stored in a network program memory 626 and stores information to the network program memory 626. The series program tabulation functioning unit 618 tabulates series program information stored in a series program memory 628 and performs writing/reading to/from the series program memory 628.

The memory unit 610 defines the friend list memory 622, the viewer memory 624, the network program memory 626, and the series program memory 628; the friend list memory 622 defines a friend list DB (automatic extraction) 6222 and a friend list DB (manual registration) 6224; the viewer memory 624 defines a viewer DB 6242 and a program viewer DB 6244; the network program memory 626 defines a network program DB 6262; and the series program memory 628 defines a series program DB 6282.

The server controlling unit 608 is constituted by a computer and is linked to a plurality of TV apparatuses 4, etc. to collect and tabulate the viewer information and to perform a process for providing the tabulation result, etc. As shown in Fig. 5, the server controlling unit 608 includes a CPU 630, a memory unit 632, a RAM 634, etc. and is constituted by connecting these components with a bus 636. The CPU 630 executes a viewer information collecting program 6322 stored in the memory unit 632. The memory unit 632 stores the operating system (OS), the viewer information collecting program 6322, and other programs 6324, and the viewer information collecting program 6322 includes a friend automatic extraction process program 63221, a viewer number tabulation process program 63222, a network program tabulation process program 63223, and a series program tabulation process program 63224. The memory unit 632 is constituted by, for example, a storage medium such as a nonvolatile memory and a hard disk apparatus and may be used also as the master memory 606 and the memory unit 610. The RAM 634 is used as a work area.

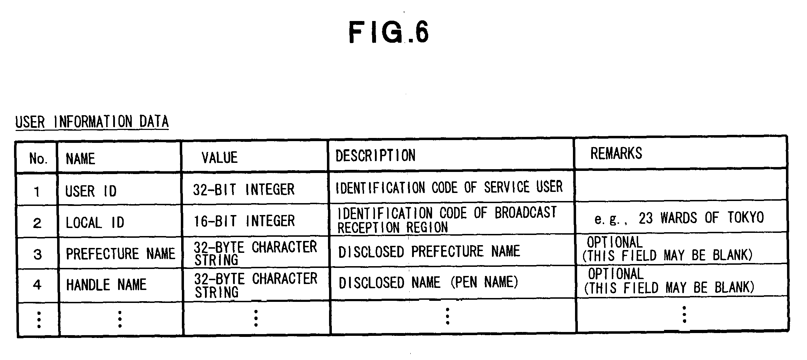

In the collecting/browsing system 2, as shown in Fig. 6, user information data are constituted by a user ID, a local ID, a prefecture name, a handle name, etc., for example. The user ID is an identification code of a service user and the value thereof is constituted by a 32-bit integer, for example. The local ID is, for example, the 23 wards of Tokyo and an identification code of the broadcast reception area, and the value thereof is constituted by a 16-bit integer, for example. The prefecture name is a disclosed prefecture name and the value thereof is constituted by a 32-byte character string, for example. The handle name is a disclosed name used by a user (e.g., pen name) and the value thereof is constituted by a 32-byte character string, for example.

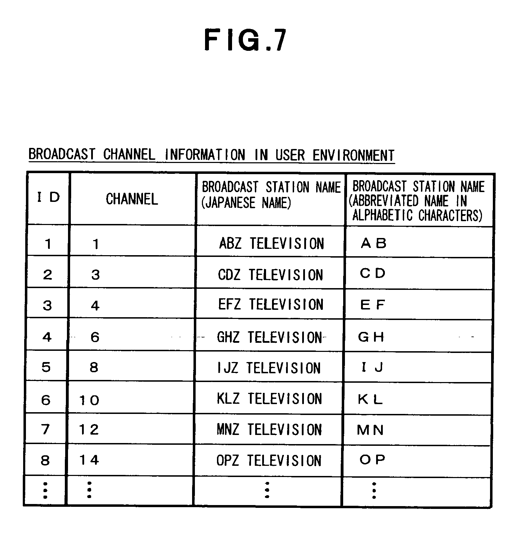

As shown in Fig. 7, broadcast channel information in a user environment is constituted by the broadcast station ID, channel, broadcast station name (Japanese name), and broadcast station name (abbreviated name in alphabetic characters). For example, a broadcast station ID = 1 corresponds to a channel =1, a broadcast station name (Japanese names) of, for example, ABZ, and a broadcast station name (abbreviated names in alphabetic characters) of "AB".

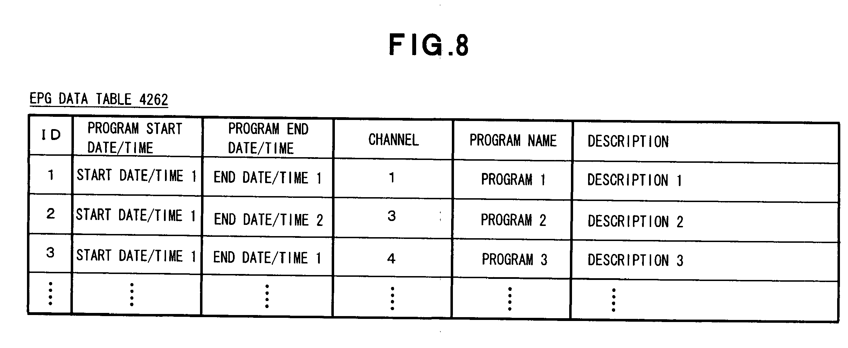

In the collecting/browsing system 2, as shown in Fig. 8, the EPG data table 4262 is constituted by the ID, program start date/time, program end date/time, channel, program name, and description. A start date/time 1, etc. are registered in the program start date/time item, and an end date/time 1, an end data/time 2, etc. are registered in the program end date/time item. Channel numbers are registered in the channel item and a program 1, a program 2, etc. are registered as the program names. The EPG data table 4262 stores information of the next one week.

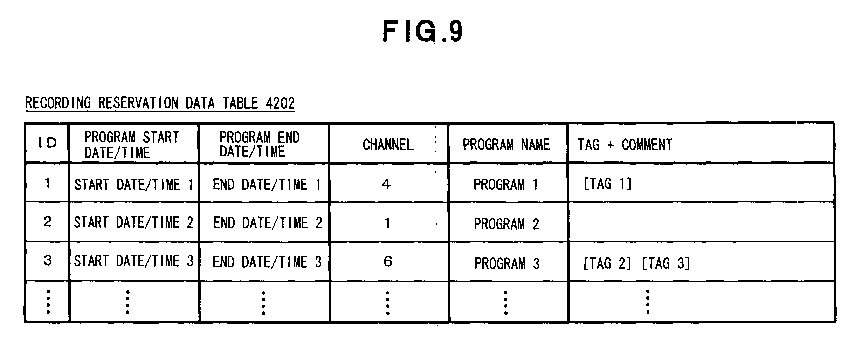

As shown in Fig. 9, the recording reservation data table 4202 is constituted by the ID, program start date/time, program end date/time, channel, program name, and tag and comment. In the tag + comment item, [tag 1], [tag 2], [tag 3], etc. are registered, for example. The recording reservation data table 4202 stores information of the next one month.

As shown in Fig. 10, the HDD recorded program data table 4204 is constituted by the ID, program start date/time, program end date/time, channel, program name, and file ID.

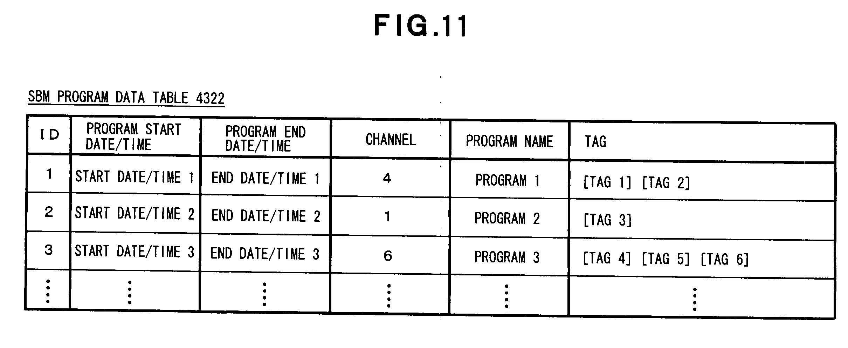

As shown in Fig. 11, the SBM program data table 4322 is constituted by the ID, program start date/time, program end date/time, channel, program name, and tag. In the tag item, for example, [tag 1], [tag 2], [tag 3], etc. are registered. The SBM program data table 4322 stores information without restriction on period.

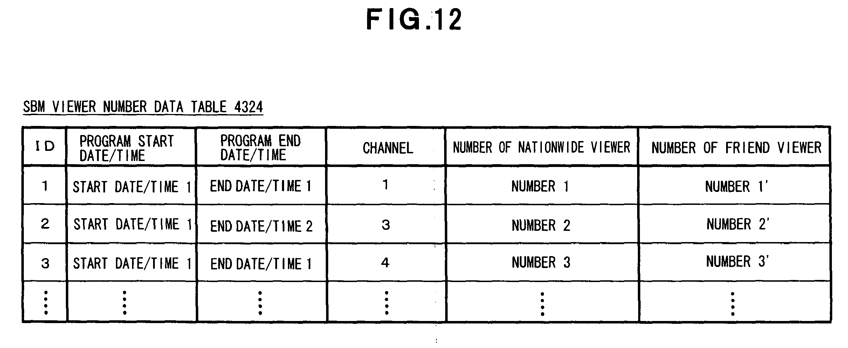

As shown in Fig. 12, the SBM viewer number data table 4324 is constituted by the ID, program start date/time, program end date/time, channel, number of nationwide viewer, and number of friend viewer. In the items of the number of nationwide viewer and number of friend viewer, a number 1, a number 2, etc. are registered. The SBM viewer number data table 4324 stores information of the next one week.

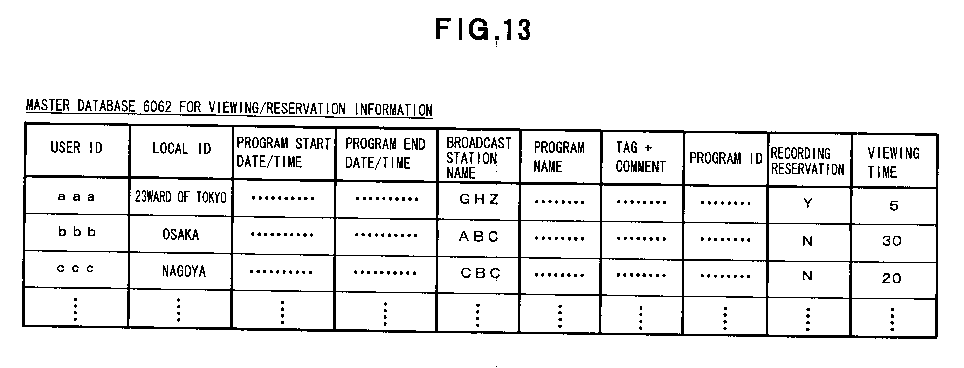

In the collecting/browsing system 2, as shown in Fig. 13, the master DB 6062 for the viewing/reservation information is constituted by the items of user ID, local ID, program start date/time, program end date/time, broadcast station name, program name, tag + comment, program ID, recording reservation, and viewing time.

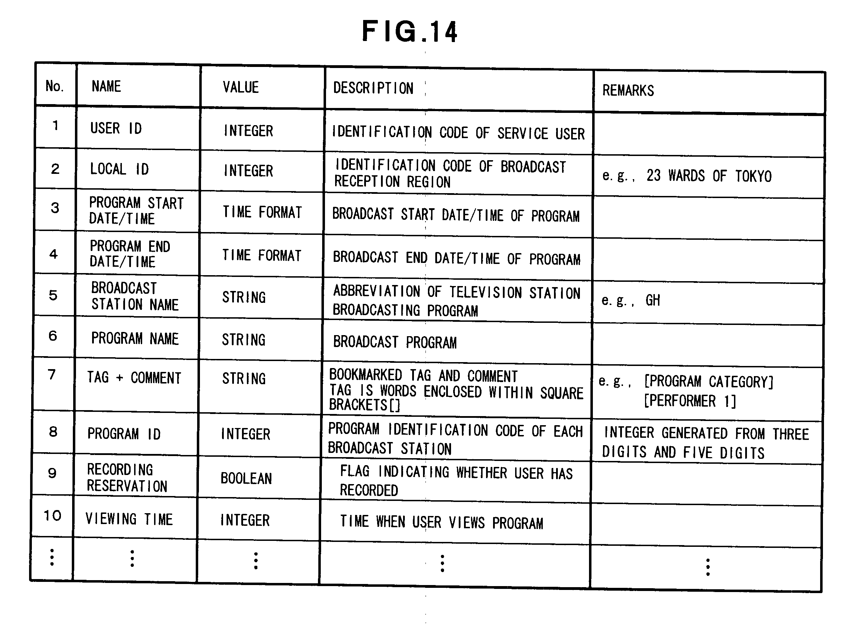

As shown in Fig. 14, with regard to each item, the user ID and the local ID are as described above. The program start date/time is a broadcast start date/time of a program, and the value thereof is formed in a time format. The program end date/time is a broadcast end date/time of a program, and the value thereof is formed in a time format. The broadcast station name is an abbreviation of a TV station broadcasting a program and is constituted by a character string, for example, GH. The program name is a broadcast program and is constituted by a character string. The tag + comment are bookmarked tag and comment, which are words enclosed within square brackets, and are constituted by character strings, for example, [program category], [performer name]. The program ID is a program identification code for identifying a program for each broadcast station and is an integer generated from three digits and five digits. The recording reservation is a flag indicating whether a user has recorded a program and is formed in a logic (boolean) format. The viewing time is a time when a user views a program and is constituted by an integer.

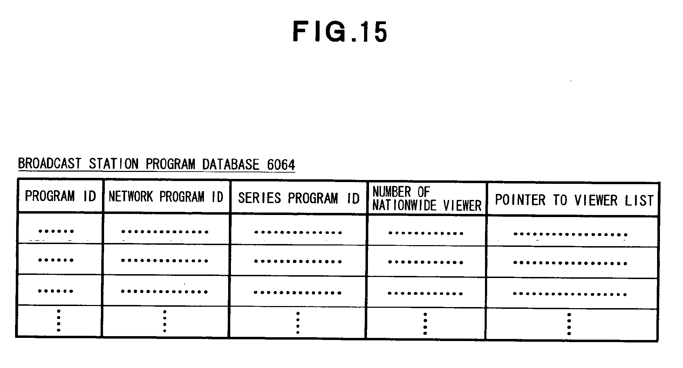

As shown in Fig. 15, the broadcast station program DB 6064 is constituted by the program ID, network program ID, series program ID, number of nationwide viewer, and pointer to viewer list.

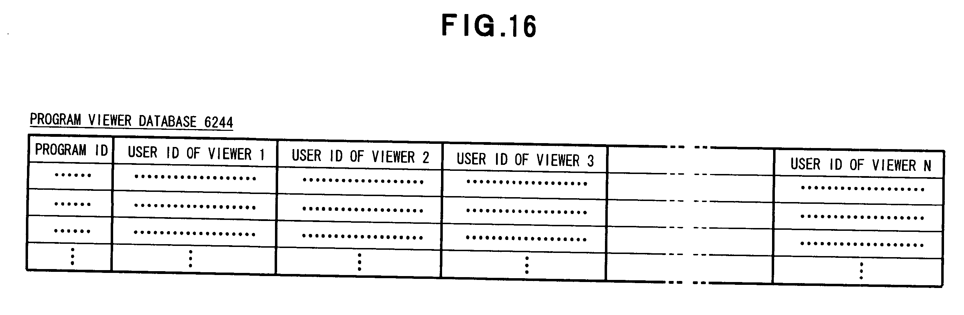

As shown in Fig. 16, the program viewer DB 6244 is constituted by the program ID, user ID of viewer 1, user ID of viewer 2, user ID of viewer 3, etc.

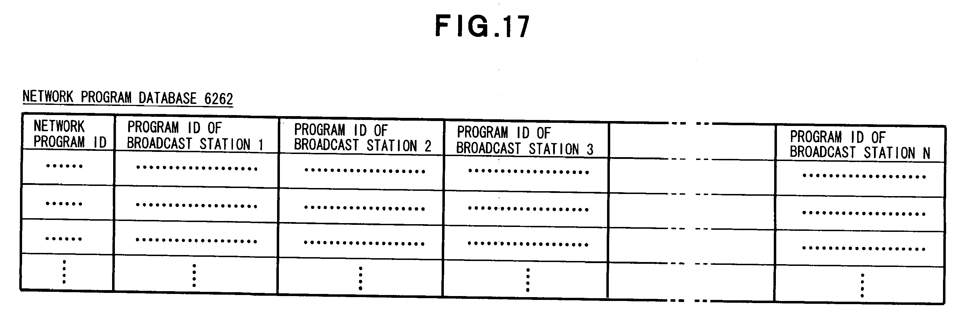

As shown in Fig. 17, the network program DB 6262 is constituted by the network program ID, program ID of broadcast station 1, program ID of broadcast station 2, program ID of broadcast station 3, etc.

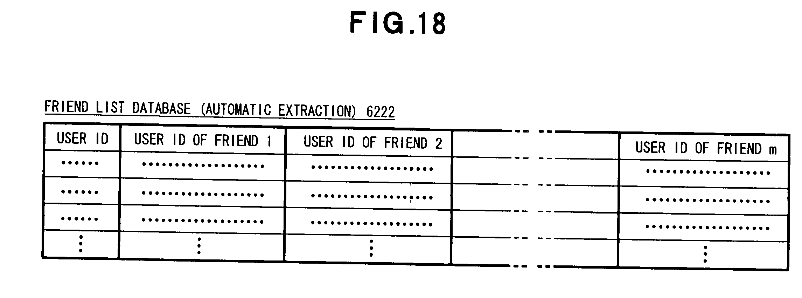

As shown in Fig. 18, the friend list DB (automatic extraction) 6222 is constituted by the user ID, user ID of friend 1, user ID of friend 2 ... user ID of friend m.

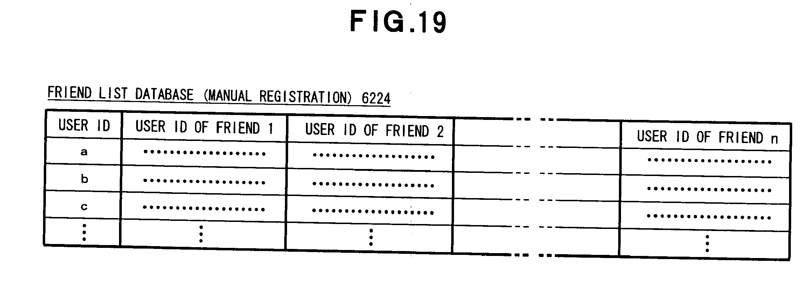

As shown in Fig. 19, the friend list DB (manual registration) 6224 is constituted by the user ID, user ID of friend 1, user ID of friend 2 ... user ID of friend n.

The operation of the collecting/browsing system 2 will be described.

In the processes of the broadcast program viewing and the reservation information accumulation, the TV apparatus 4 performs:
(1) an AV system process;
(2) a viewing transmission system process (parallel process);
(3) an EPG acquisition process;
(4) a user manipulation process (recording transmission system process;
(5) a server transmission (recording) process;
(6) a viewing transmission system process; and
(7) a server transmission (viewing) process, and the SBM server 6 performs:
(8) a reservation information accumulation process;
(9) a similar user extraction process;
(10) a viewer data update process; and
(11) a program information providing process. Processes associated with these processes are performed, which are:
(12) an automatic SBM registration process;
(13) a tag registration process;
(14) a bookmark reference;
(15) automatic recording; and
(16) an EPG screen. Each process will hereinafter be described.

### [Process of TV Apparatus 4]

### (1) AV System Process

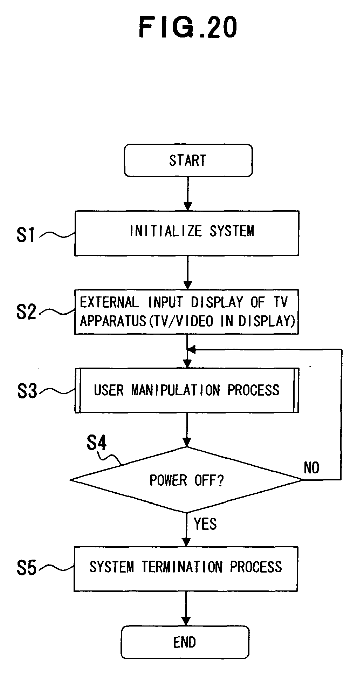

As shown in Fig. 20, in the AV system process, the system is initialized (step S1); external input display such as "TV/VIDEO" in display is performed in the TV apparatus 4 (step S2); and a user manipulation process is performed (step S3). After this process, it is monitored whether the power is turned off or not (step S4); if the power is not turned off (NO at step S4), the user manipulation process is continued (step S3); and if the power is turned off (YES at step S4), a system termination process is performed (step S5) to terminate this main routine.

### (2) Viewing Transmission System Process

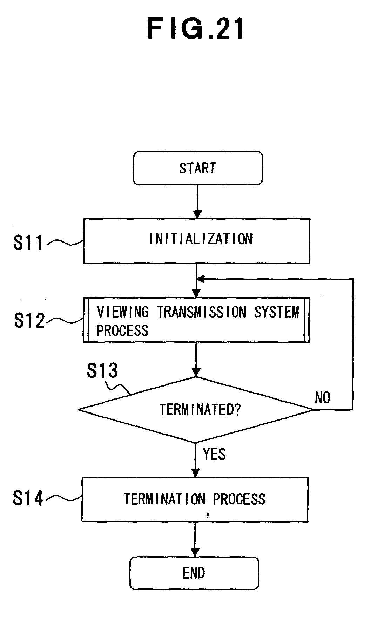

The viewing transmission system process is processed in parallel with the aforementioned AV system process. As shown in Fig. 21, in the viewing transmission system process, the SBM transmission system 434 is initialized (step S11) and the process of the SBM transmission system 434 is performed (step S12). It is monitored whether this process is terminated or not (step S13); if the process is not terminated (NO at step S13), the process of the SBM transmission system 434 is continued (step S12); and if the process is terminated (YES at step S13), a termination process is performed (step S14) to terminate this routine.

### (3) EPG Acquisition Process

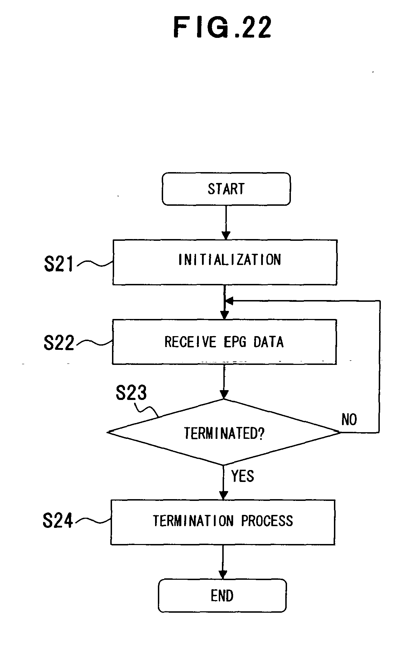

As shown in Fig. 22, in the EPG acquisition process, the EPG system 422 is initialized (step S21) and EPG acquisition (EPG data reception) is performed (step S22) . It is monitored whether this process is terminated or not (step S23); if the process is not terminated (NO at step S23), the process of the EPG acquisition is continued (step S22) ; and if the process is terminated (YES at step S23), a termination process is performed (step S24) to terminate this routine.

### (4) User Manipulation Process (Recording Transmission System Process

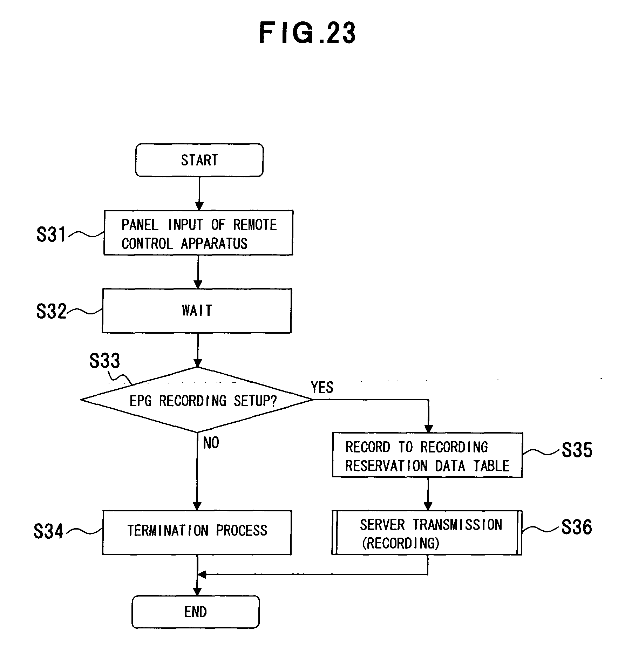

The user manipulation process is a subroutine of step S3 of the AV system process (Fig. 20) . In the user manipulation process, as shown in Fig. 23, panel input is performed from the remote control apparatus 438 (remote control/panel button operation process) (step S31); after a wait state (step S32), it is monitored whether EPG recording setup (entry) is performed or not (step S33) ; if the EPG recording setup is not performed (NO at step S33), a termination process is performed (step S34) to terminate this process.

If the EPG recording setup is performed (YES at step S33), the setup is recorded (saved) in the recording reservation data table 4202 (step S35); a process is performed for the serve transmission (recording) (step S36); and this process is terminated.

### (5) Server Transmission (Recording) Process

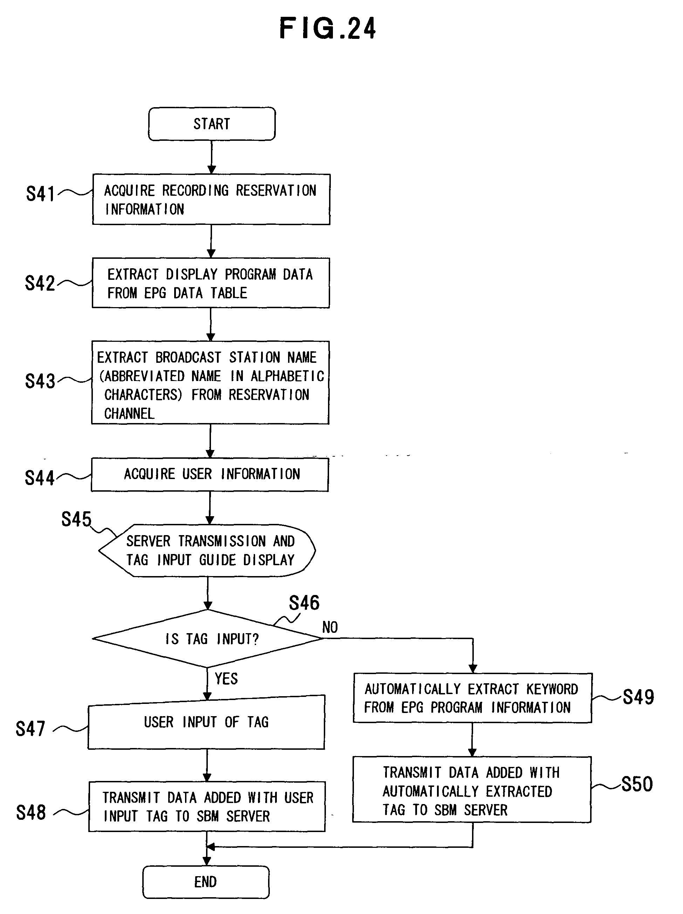

The server transmission (recording) process is a subroutine of step S36 of the user manipulation process (Fig. 23). In the server transmission (recording), as shown in Fig. 24, the recording reservation information is acquired (i.e. read, got) (step S41); the display program data are extracted (i.e. selected, inquired) from the EPG data table 4262 (step S42); and the broadcast station name (abbreviated name in alphabetic characters) is extracted (i.e. selected, inquired) from the reserved channel (step S43).

The user information is acquired (i.e. read, got) (step S44) ; the server transmission is performed along with tag input guide display (step S45) ; it is inquired whether the tag is input or not (step S46); if the tag is input (YES at step S46), the user-input of the tag is accepted (step S47) ; the data with the user-input tag added are transmitted to the SBM server 6 (step S48); and this process is terminated.

If the tag is not input (NO at step S46), a keyword is automatically extracted from the EPG program information (step S49) ; the data with the automatically extracted tag added are transmitted to the SBM server 6 (step S50); and this process is terminated.

### (6) Viewing Transmission System Process

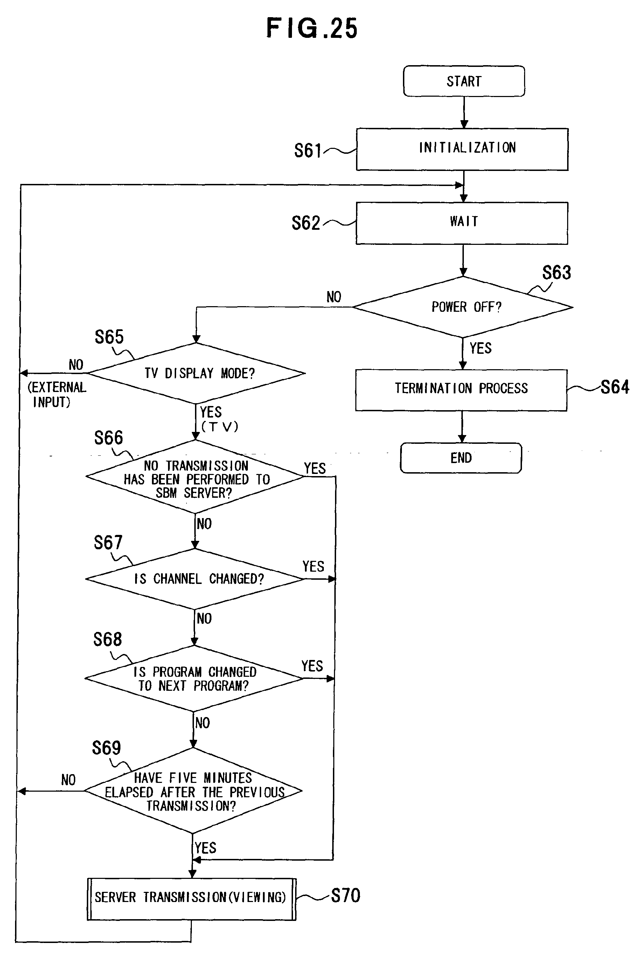

The viewing transmission system process is a subroutine of step S12 of the viewing transmission system process (Fig. 21). In the viewing transmission system process, as shown in Fig. 25, the SBM transmission system 434 is initialized (step S61) ; after a wait state (step S62), it is monitored whether the power is turned off or not (step S63) ; and if the power is turned off (YES at step S63), a termination process is performed (step S64) to terminate this process.

If the power is not turned off (NO at step S63), it is determined whether the apparatus is in a TV display mode or not (step S65), and if the apparatus is not in the TV display mode (NO at step S65), the procedure goes back to step S62. If the apparatus is in the TV display mode (YES at step S65), it is determined whether no transmission has been performed to the SBM server 6 or not (step S66); if the transmission to the SBM server 6 has been performed (NO at step S66), it is determined whether the channel is changed or not (step S67) ; if the channel is not changed (NO at step S67), it is determined whether a change to the next program is performed or not (step S68) ; if the change to the next program is not performed(NO at step S68), it is determined whether a predetermined time, for example, five minutes have elapsed after the previous transmission or not (step S69); and if five minutes have not elapsed after the previous transmission (NO at step S69), the procedure goes back to step S62. If five minutes have elapsed after the previous transmission (YES at step S69), the process of the server transmission (viewing) is performed (step S70) and the procedure goes back to step S62. If no transmission has been performed to the SBM server 6 (YES at step S66), the server transmission (viewing) process is performed (step S70), and the procedure goes back to step S62.

### (7) Server Transmission (Viewing) Process

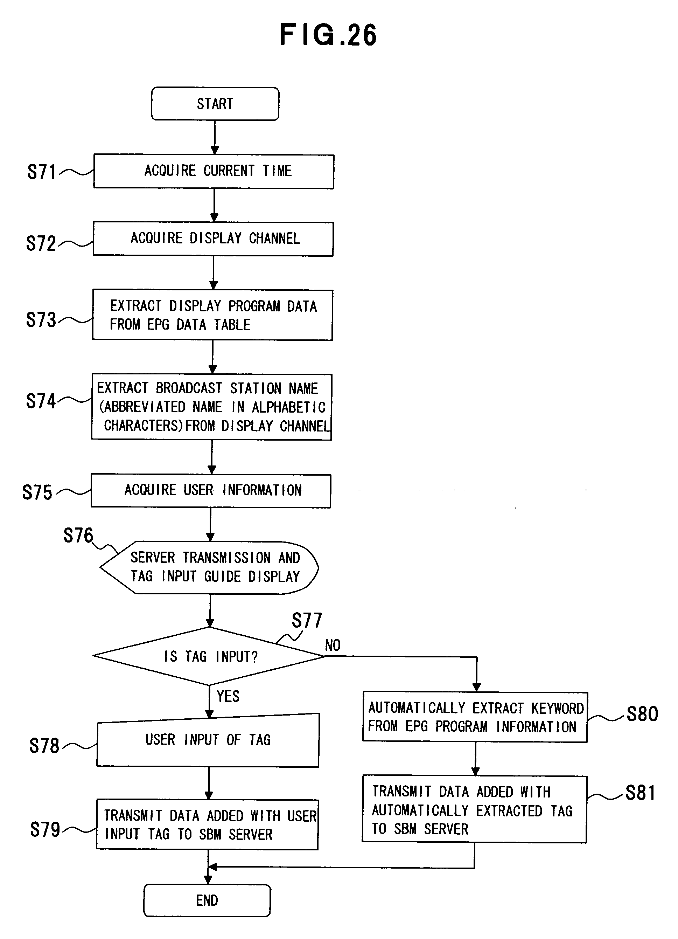

The server transmission (viewing) process is a subroutine of step S70 of the viewing transmission system process (Fig. 25). In the server transmission (viewing) process, as shown in Fig. 26, after acquisition (getting) of a current time (step S71) and acquisition (getting) of a display channel (step S72), the display program data are extracted (selected) from the EPG data table 4262 (step S73) ; the broadcast station name (abbreviated name in alphabetic characters) is extracted (selected) from the display channel (step S74); the user information is acquired (got) (step S75); and the server transmission and the tag input guide display are performed (step S76). It is determined whether the tag is input or not (step S77), and if the tag is input (YES at step S77), the user input of the tag is accepted (step S78) ; the data with the user-input tag added are transmitted to the SBM server 6 (step S79) ; and this process is terminated.

If the tag is not input (NO at step S77), a keyword is automatically extracted from the EPG program information (step S80); the data with the automatically extracted tag added are transmitted to the SBM server 6 (step S81); and this process is terminated.

### [Process of SBM Server 6]

### (8) Reservation Information Accumulation Process

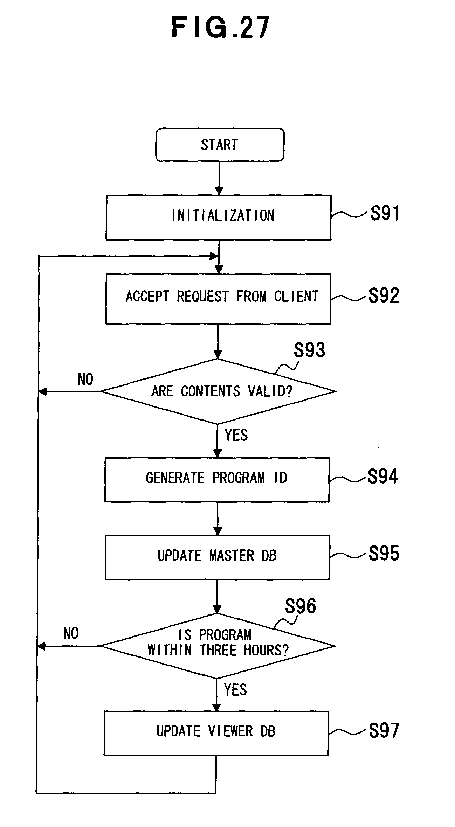

The reservation information accumulation process is a process for the viewing and reservation information accumulation of the client apparatus. In the reservation information accumulation process, as shown in Fig. 27, initialization is performed (step S91); a request is accepted from the TV apparatus 4 that is the client apparatus (step S92) ; it is determined whether the request contents are valid or not (step S92); if the contents are not valid (NO at step S93), the procedure goes back to step S93. If the contents are valid (YES at step S93), a program ID is generated (step S94) ; the master DB 6062 is updated (step S95) ; it is determined whether or not the program is a program within a predetermined time, for example, within three hours (step S96); and if the program is not within three hours (NO at step S96), the procedure goes back to step S92. If the program is within three hours (YES at step S96), the viewer DB 6242 is updated (step S97), and the procedure goes back to step S92.

### (9) Similar User Extraction Process

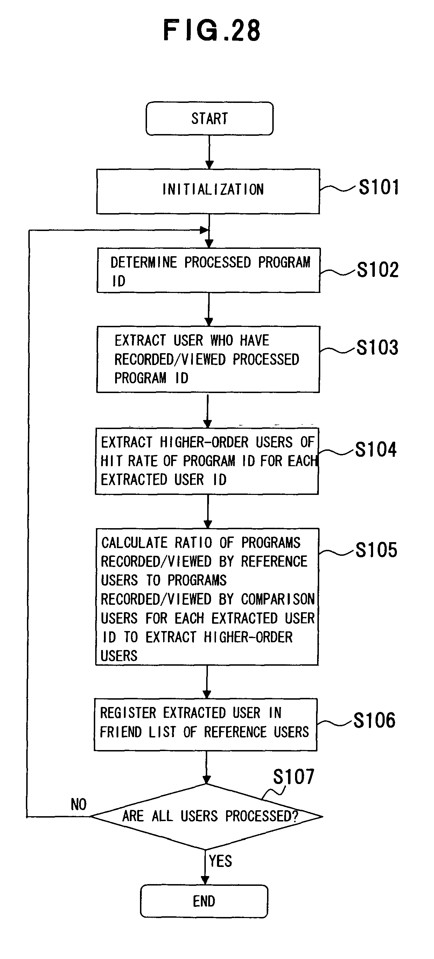

The similar user extraction process is a process for extracting users with similar viewing tendencies in the SBM server 6. The similar user extraction process is performed once a week for example, and in this process, as shown in Fig. 28, initialization is performed (step S101); a processed program ID is determined (step S102); and users are extracted who have recorded/viewed the processed program ID (step S103). Higher-order users of a hit rate of the program ID are extracted for each extracted user ID (step S104), and a ratio of programs recorded/viewed by reference users to programs recorded/viewed by comparison users is calculated for each extracted user ID to extract higher-order users (step S105). The extracted users are registered (updated) in a friend list of the reference (target) users (step S106).

It is determined whether these processes are performed for all the users or not (step S107); if the processes are not completed for all the users (NO at step S107), the procedure goes back to step S102 to repeat the same processes; and if the processes are completed for all the users (YES at step S107), this process is terminated.

### (10) Viewer Data Update Process

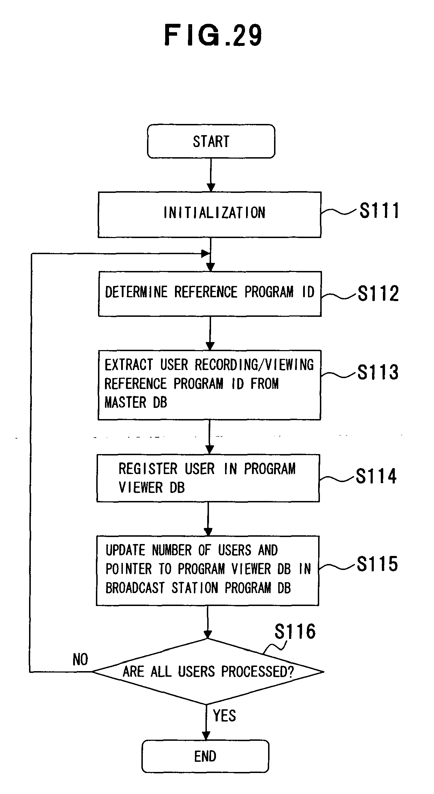

The viewer data update process is a process of performing the viewing and reservation display for the users with similar viewing tendencies in the SBM server 6. In the viewer data update process, as shown in Fig. 29, initialization is performed (step S111) ; a reference program ID is determined (step S112); a user recording/viewing the reference program ID is extracted from the master DB 6062 (step S113); the user 8 is registered (updated) in the program viewer DB 6244 (step S114); and the number of users and a pointer to the program viewer DB 6244 are updated in the broadcast station program DB 6064 (step S115).

It is determined whether these processes are performed for all the users or not (step S116); if the processes are not completed for all the users (NO at step S116), the procedure goes back to step S112 to repeat the same processes; and if the processes are completed for all the users (YES at step S116), this process is terminated.

### (11) Program Information Providing Process

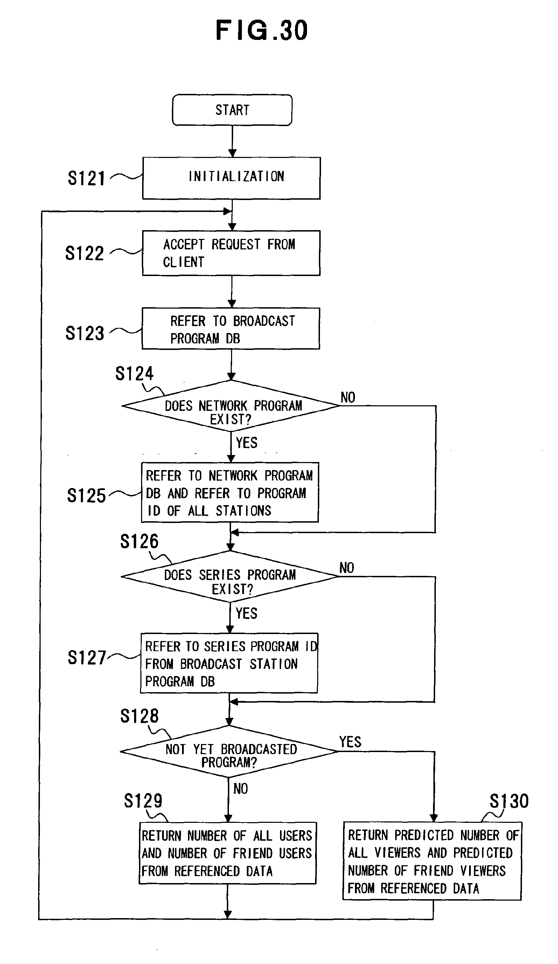

The program information providing process is a process of performing the viewing and reservation display for the users with similar viewing tendencies in the SBM server 6. In the program information providing process, as shown in Fig. 30, initialization is performed (step S121); a request from the client apparatus is accepted (step S122) ; the broadcast station program DB 6064 is referenced (step S123); it is determined whether a network program exists or not (step S124); if the network program exists (YES at step S124), the network program DB 6262 is referenced and program IDs of all the stations are referenced (step S125); and it is determined whether a series program exists or not (step S126). If the network program does not exist (NO at step S124), it is determined whether a series program exists or not (step S126).

If the series program exists (YES at step S126), the series program ID is referenced from the broadcast station program DB 6064 (step S127) and it is determined whether or not the program is a program that is not yet broadcasted (step S128). If the series program does not exist (NO at step S126), it is determined whether or not the program is a program that is not yet broadcasted (step S128).

If the program is not a program that is not yet broadcasted (NO at step S128), the number of all the viewers and the number of the friend viewers are returned from the referenced data (step S129) and the procedure goes back to step S122. If the program is a program that is not yet broadcasted (YES at step S128), the predicted number of all the viewers and the predicted number of the friend viewers are returned from the referenced data (step S130) and the procedure goes back to step S122.

### (12) Automatic SBM Registration Process

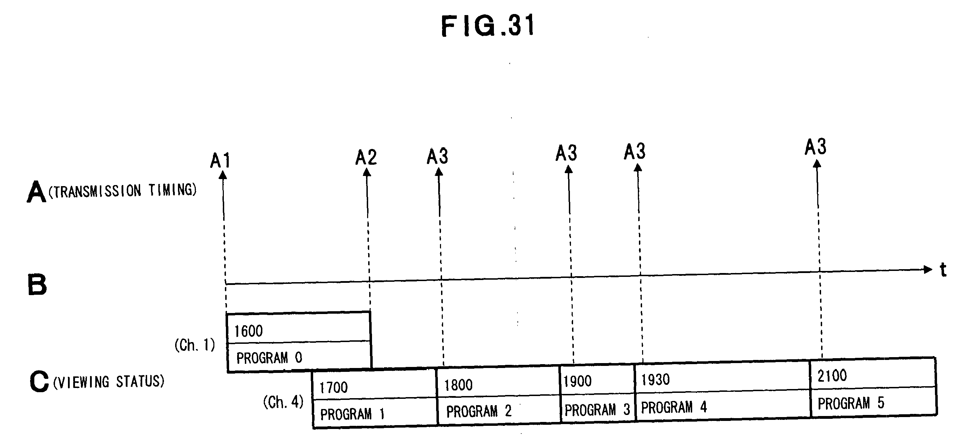

The SBM registration may be performed during any one of the viewing of the program, the EPG display, the recording reservation, and the execution of the recording. When the program information is transmitted from the TV apparatus 4 to the SBM server 6 during the program viewing, as shown in Figs. 31A to 31C, the transmission timing may be at any one of the time of starting the TV viewing, changing the channel, or changing the program. In Figs. 31A to 31C, Fig. 31A shows the transmission timings; Fig. 31B shows elapse of time (t) representing the viewing status; and Fig. 31C shows transitions of programs. The viewing of the programs is performed in accordance with the elapse of time t (=1600, 1700, 1730, 1800, 1900, 1930...); the transmission timing A1 is at the time of starting the TV viewing; the transmission timing A2 is at the time of changing the channel; and the transmission timing A3 is at the time of changing the program. Specifically, the viewing of a channel 1 is started at time 16: 00; the transmission is performed at the time point A1; the channel 1 is changed to a channel 4 at time 17:30; the transmission is performed at the time point A2; at the channel 4, the program is changed to a program 2 at time 18:00, to a program 3 at time 19:00, to a program 4 at time 19:30, etc.; and the SBM is transmitted at each time point A3.

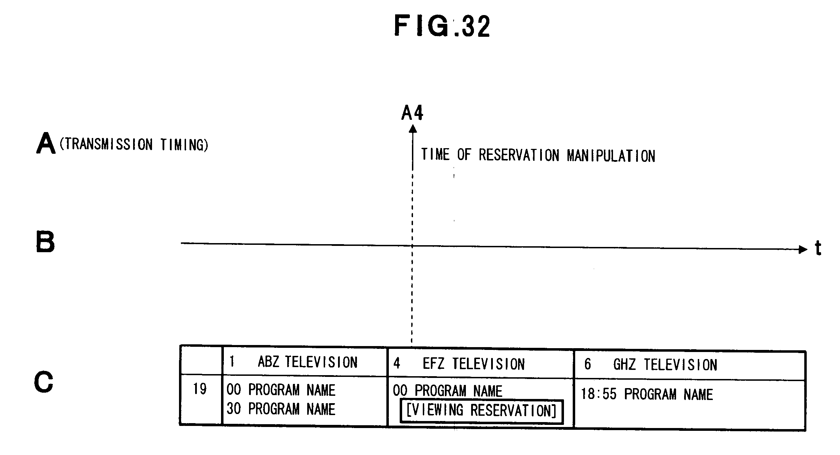

When the program information of the viewing reservation is registered in the SBM server 6 during the EPG display, as shown in Figs. 32A to 32C, the transmission timing is set during the EPG display. Fig. 32A is the transmission timing; Fig. 32B shows elapse of time (t) representing the viewing status; and Fig. 32C shows broadcast programs of each broadcast station. In one hour from 19 o'clock, each program is broadcasted at ABZ of the channel 1, EFZ of the channel 4, and GHZ of the channel 6; the viewing reservation is set to EFZ of the channel 4; and the SBM is transmitted at the time of reservation manipulation A4.

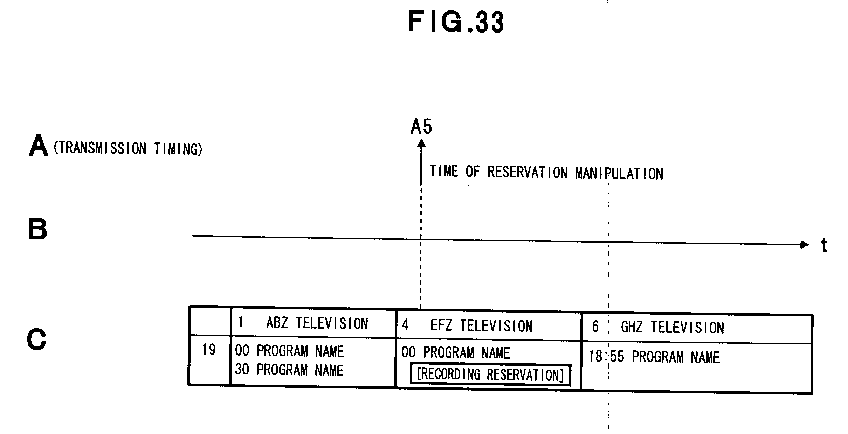

When the program information of the recording reservation is registered in the SBM server 6 during the recording reservation, as shown in Figs. 33A to 33C, the transmission timing is set during the recording reservation. In Figs. 33A to 33C, Fig. 33A is the transmission timing; Fig. 33B shows elapse of time (t) representing the viewing status; and Fig. 33C shows broadcast programs of each broadcast station. In one hour from 19 o'clock, each program will be broadcasted at ABZ of the channel 1, EFZ of the channel 4, and GHZ of the channel 6; the recording reservation is set to EFZ of the channel 4; and the SBM is transmitted at the time of reservation manipulation of recording A5.

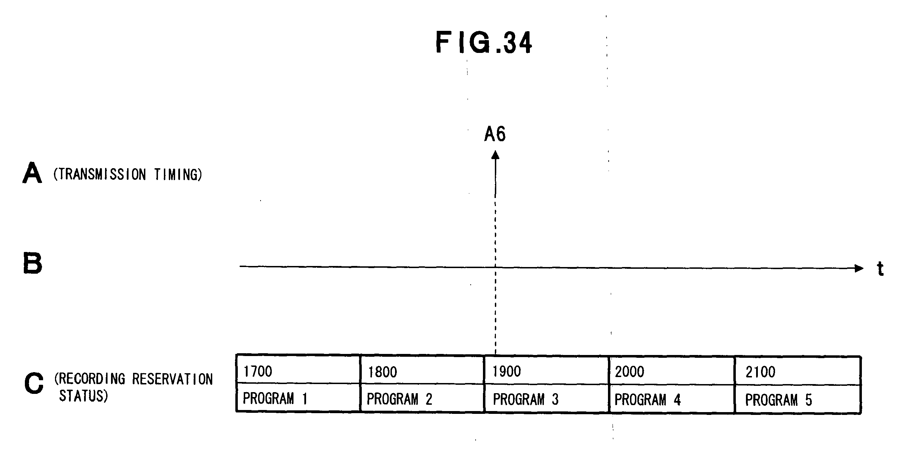

When the program information during recording is registered in the SBM server 6 during the execution of the recording, as shown in Figs. 34A to 34C, the transmission timing is set during the execution of the recording. In Figs. 34A to 34C, Fig. 34A is the transmission timing; Fig. 34B shows elapse of time (t) representing the viewing status; and Fig. 34C shows the status of recording reservations. In this case, the recording reservations are set at the time 1700 for a program 1, 1800 for a program 2, 1900 for a program 3, 2000 for a program 4, etc. In this case, the transmission timing is A6.

### (13) Tag Registration Process

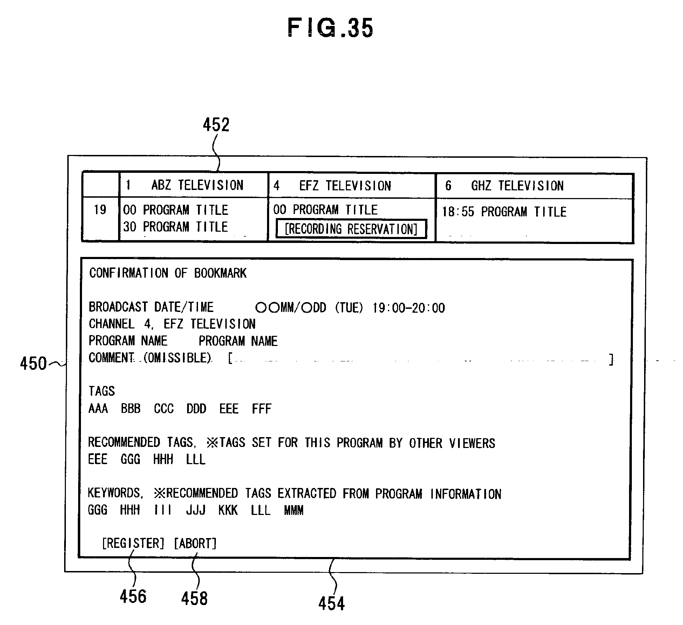

For the tag registration process, a tag input screen is established which can be switched during the TV display, the EPG display, the recording reservation, and the execution of the recording on the TV apparatus 4. For example, as shown in Fig. 35, a tag input screen 450 displays an item displaying portion 452 and an SBM confirmation displaying unit 454; the item displaying portion 452 displays time, each broadcast stations ABZ, EFZ, GHZ, and broadcast programs; and the SBM confirmation displaying unit 454 displays the broadcast date and time, the channel, comments, tags, recommended tags, keywords, and dialogue buttons 456, 458 for selecting "register" or "abort".

The recommended tags are accompanied by the display of "tags set for this program by other viewers", and the keywords are accompanied by the display of "recommended tags extracted from program information".

In this way, the tag input screen 450 of the TV apparatus 4 displays the tag candidates (keywords) extracted from the EPG information and the tag candidates (recommended tags) acquired from the SBM server 6, and the tag input screen 450 enables the selection of one or a plurality of the tag candidates and the comment input of the tag/comment using a free text.

### (14) Bookmark Reference

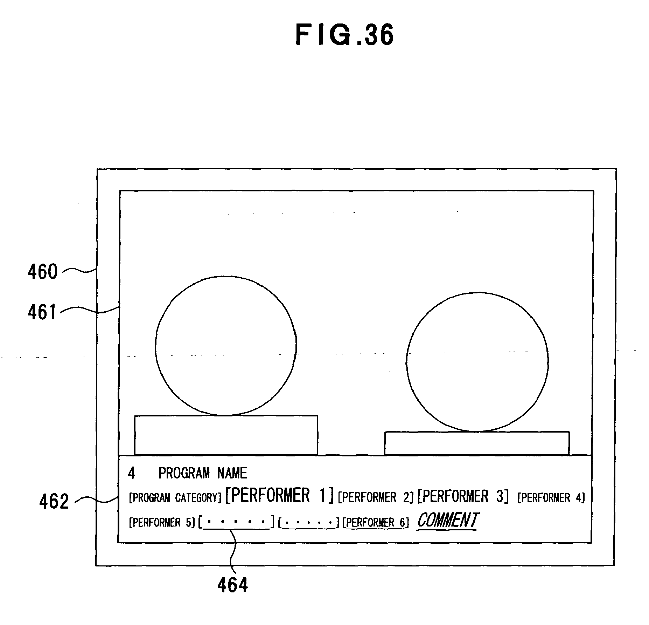

The TV apparatus 4 includes a function that displays a tag along with detail information during the image display on the TV display screen, and the display of the tag is emphasized in accordance with the number of users that has registered each tag. For example, as shown in Fig. 36, a TV display screen 460 of the TV apparatus 4 displays a detail information screen 462 overlapping an image displaying unit 461, and the detail information screen 462 displays tags 464. The display of the tag 464 is emphasized in accordance with the number of users that have registered each tag 464 and, for example, the magnitude of the number of users is displayed in accordance with the size of the characters.

Description will be made of the operation based on the user manipulation of the detail information screen 462.

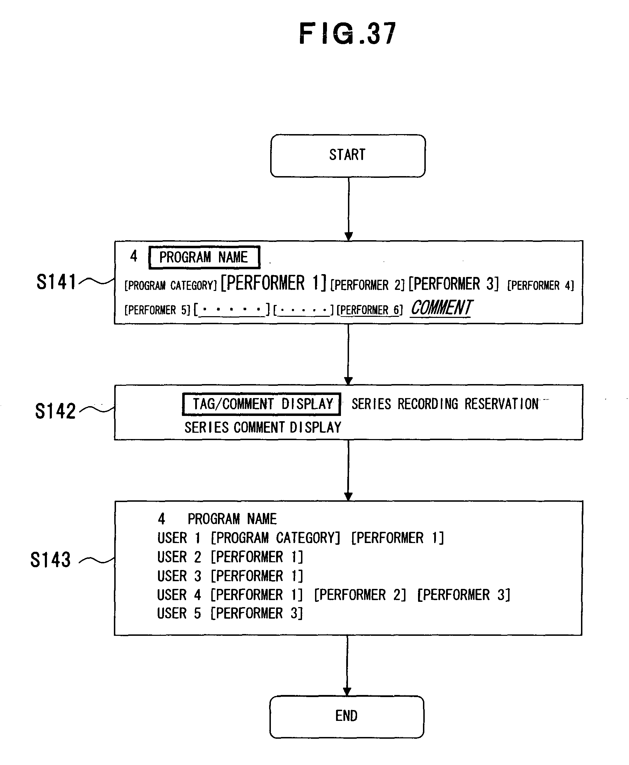

Based on the selection of the program name, other SBM registration users and respective tag/comments are displayed. For example, as shown in Fig. 37, in the case of program name selection 1 (step S141), the channel, the program name, the program category, the performers, the program contents, the comment, etc. are displayed, and the size of the characters thereof corresponds to the number of the tags. For this program name, selection items are displayed which are tag comment display, series recording reservation, and series comment display (step S142) and when the tag/comment display is selected, the tag-added program categories, performers, comments, etc. for the channel and the program name are displayed for SBM registration users, for example, users 1 to 5 (step S143) and this process is terminated.

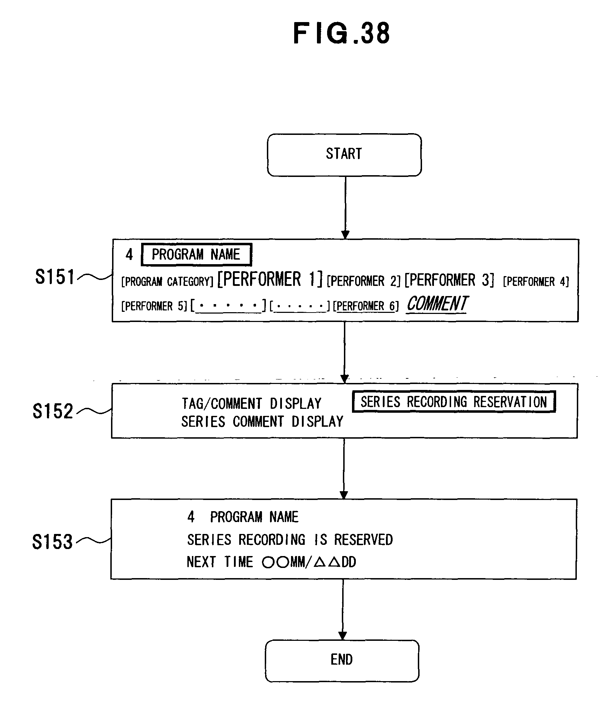

Based on the selection of the program name, series recording reservation of the program can be performed. The series recording reservation is, for example, recording setup for the same day of the week and the same time of day. For example, as shown in Fig. 38, in the case of program name selection 2 (step S151), the channel, the program name, the program category, the performers, the program contents, the comment, etc. are displayed as well, and the size of the characters thereof corresponds to the number of the tags. For this program name, the selection items are displayed which are the tag/comment display, the series recording reservation, and the series comment display (step S152) and when the series recording reservation is selected, a message for the channel and the program name is displayed (step S153) as, for example,
"series recording reservation is completed
next time is month/day" and this process is terminated.

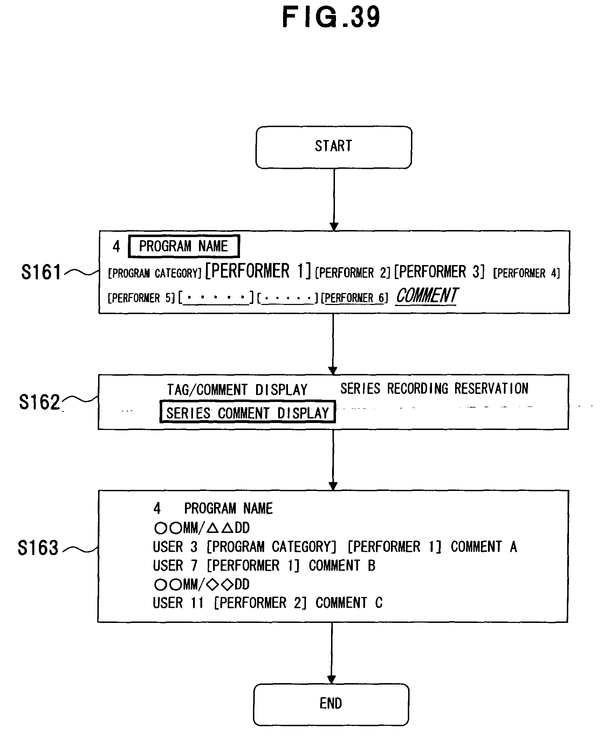

By selecting the program name, comments for the program through the series can be displayed and a comment can be input. For example, as shown in Fig. 39, in the case of program name selection 3 (step S161), the channel, the program name, the program category, the performers, the program contents, the comment, etc. are displayed as well, and the size of the characters thereof is displayed correspondingly to the number of the tags. For this program name, selection items are displayed which are tag/comment display, series recording reservation, and series comment display (step S162) and when the series comment display is selected, the date, the user 3, the tag-added program categories, performers, comments, etc. for the channel and the program name are displayed as a message (step S163) and this process is terminated.

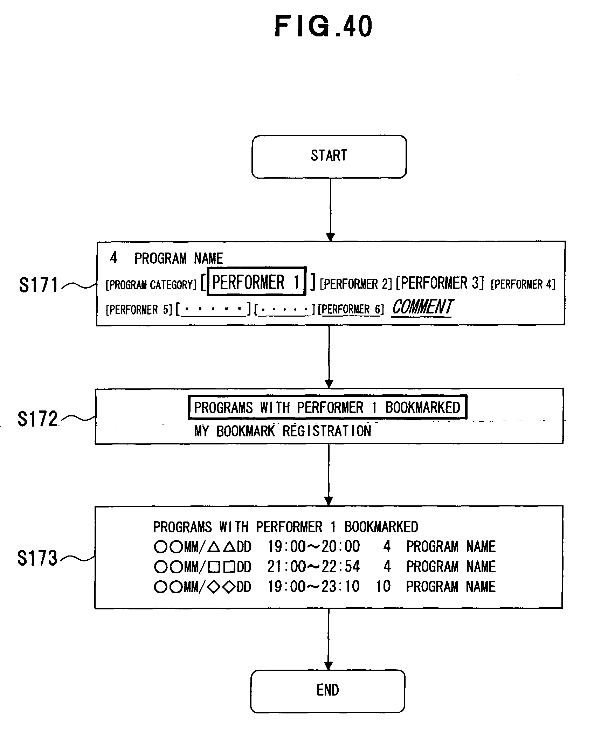

Based on the selection of a tag, a list is displayed for programs with the tag bookmarked. For example, as shown in Fig. 40, in the case of tag selection 1 (step S171), the channel, the program name, the program category, the performers, the program contents, the comment, etc. are displayed as well, and the size of the characters thereof is displayed correspondingly to the number of the tags. For this program name, selection items are displayed which are "programs with performer 1 bookmarked" and "my bookmark registration" (step S172) and when the "programs with performer 1 bookmarked" is selected, dates/times, channels, and program names are displayed as the programs with performer 1 bookmarked (step S173) and this process is terminated.

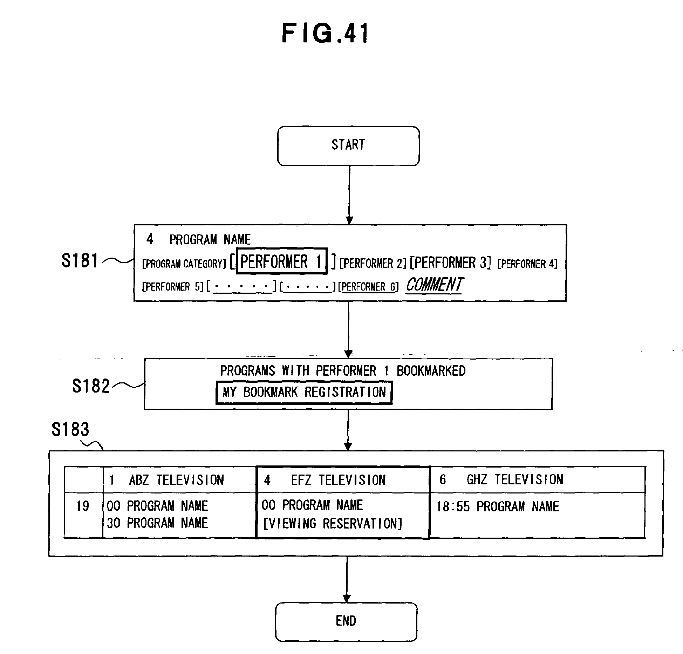

Based on the selection of a tag, the tag is bookmarked. All the programs relating to the bookmark are highlighted on the EPG screen. For example, as shown in Fig. 41, in the case of tag selection 2 (step S181), the channel, the program name, the program category, the performers, the program contents, the comment, etc. are displayed as well, and the size of the characters thereof is displayed correspondingly to the number of the tags. For this program name, selection items are displayed which are "programs with performer 1 bookmarked" and "my bookmark registration" (step S182) and when the "my bookmark registration" is selected, broadcast station names and program names are displayed for a certain time period (step S183) and this process is terminated. In this case, the bookmarked programs are highlighted to display, for example, by changing the background color.

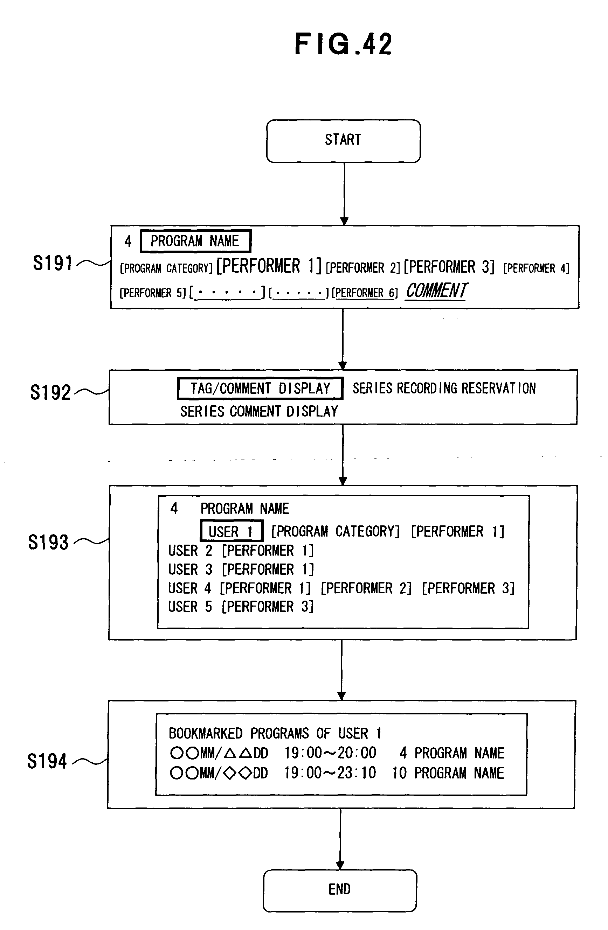

Based on the selection of a user, a list is displayed for programs bookmarked by the user. For example, as shown in Fig. 42, in the case of user selection 1 (step S191), the channel, the program name, the program category, the performers, the program contents, the comment, etc. are displayed as well, and the size of the characters thereof is displayed correspondingly to the number of the tags. For this program name, selection items are displayed which are "tag/comment display", "series recording reservation", and "series comment display" (step S192) ; when the "tag/comment display" is selected, the channel and the program name are displayed along with the program contents and performers with tags for each user (step S193); for example, when a user 1 is selected from the display screen, a list of bookmarked programs is displayed which is dates/times, channels, program names, etc., along with a message indicating that bookmarked programs of the selected user 1 are displayed (step S194); and the process is terminated.

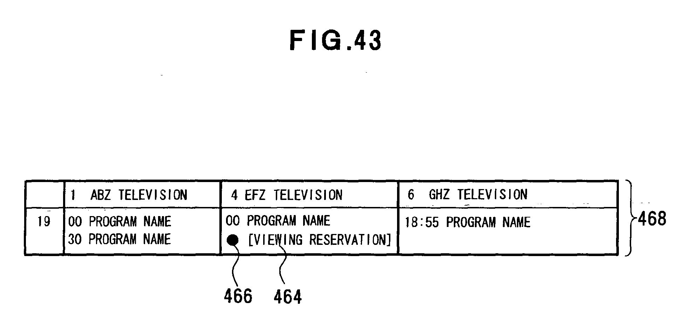

Based on the selection of a user, the user is bookmarked and the program relating to the bookmark is highlighted on the EPG screen 468. For example, as shown in Fig. 43, in the case of user selection 2, a bookmark is registered for the user, and the program bookmarked by the bookmarked user is highlighted on the EPG screen 468. In this case, the time, the broadcast station names, and program names of each broadcast station are displayed along with a mark 466 identifying the program that is bookmark-registered by the user and a tag 464, and the mark 466 indicates the program relating to the bookmark of the user.

### (15) Automatic Recording

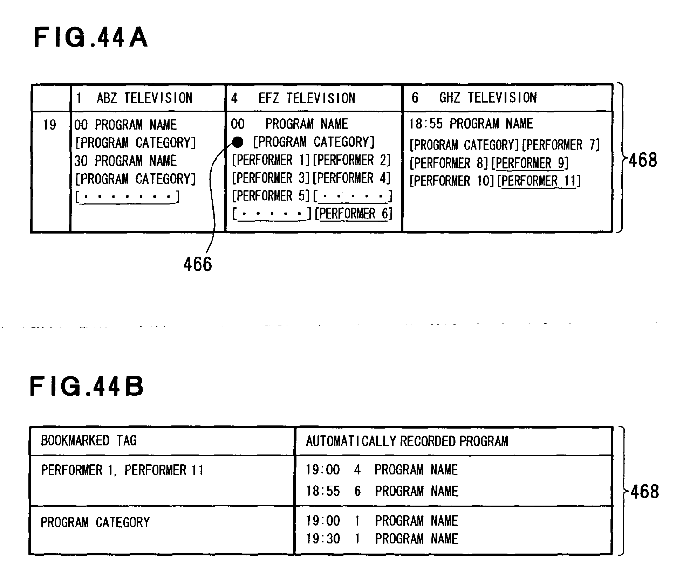

The program bookmarked with the tag is recorded automatically. For example, as shown in Fig. 44A, the mark 466 is added to the time, the broadcast station name, and the broadcast program name on the EPG screen 468. The automatically recorded program is identified along with the bookmarked tag and, as shown in Fig. 44B, performers, program contents, times of automatically recorded programs, channels, and program names are displayed for the bookmarked tag.

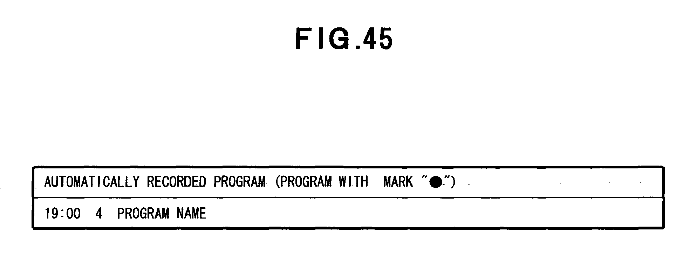

The bookmark-registered program is recorded automatically and, for example, as shown in Fig. 45, the time, channel, and program name are displayed as the automatically recorded program.

### (16) EPG Screen

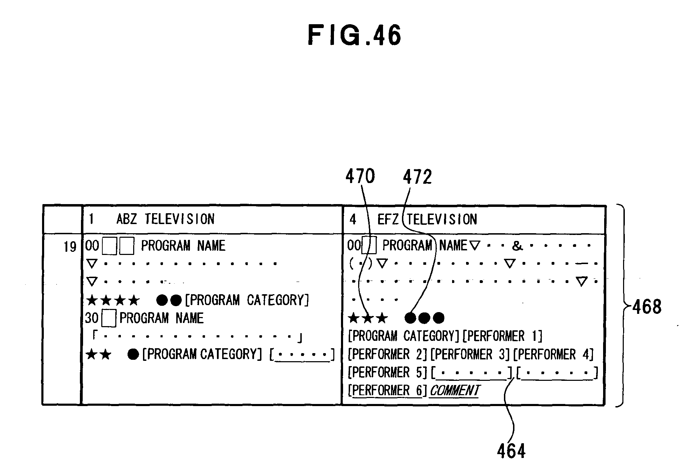

As shown in Fig. 46, the EPG screen 468 displays the times, the broadcast station names, and the broadcast contents as well as marks 470, 472. The mark 470 is the nationwide viewer number and a program popular among viewers can be easily selected on the EPG screen 468. This is useful when a user want to select and view a program with topicality. The mark 472 represents the number of the friends viewing the program and the program viewed by the friends can be easily selected on the EPG screen 468. This is useful when a user want to talk enjoyably about the same topic of program with friends. Particularly, a user can learn the local topicality which cannot be measured with the overall viewer rate. The tag 464 is tag information, and the underlined tag 464 is tag information representing a viewer setup tag. A program category, performers, keywords, etc. can be listed. By selecting the tag with a remote controller, programs with the same keyword can be known. The comment is a link to comments written by viewers, and comments to the program can be read and written.

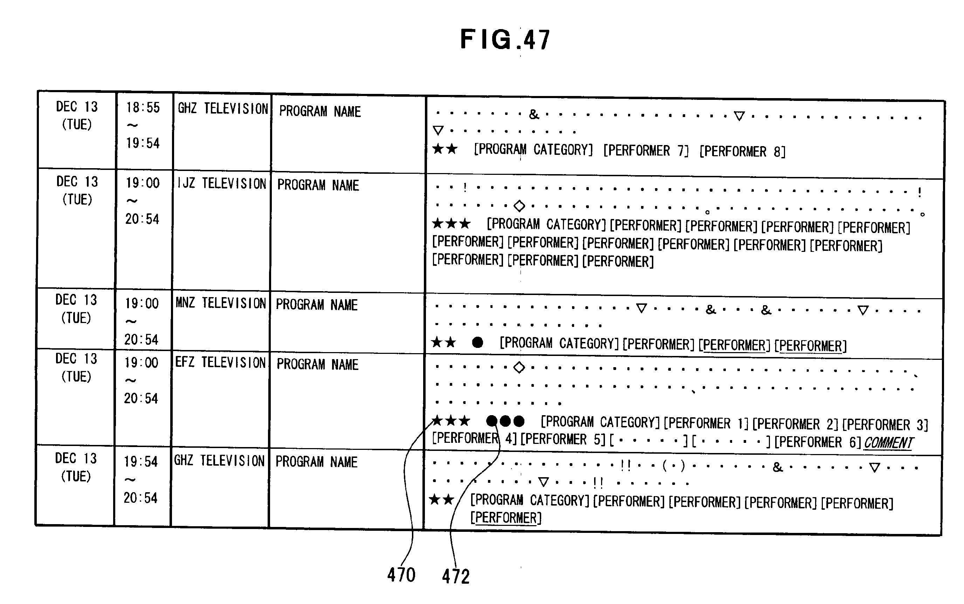

When the tag (program category) is selected, for example, as shown in Fig. 47, programs with the same tag in preceding and subsequent time zones are listed and displayed as a screen corresponding to the selected program category. In this display, dates, times, broadcast stations, broadcast contents, performers, and comments are displayed, and the tags are displayed.

Description will be made of an SBM registration receiving process, an SBM reference responding process, and a friend bookmark reference responding process of the SBM server 6.

### (1) SBM Registration Receiving Process of SBM Server 6

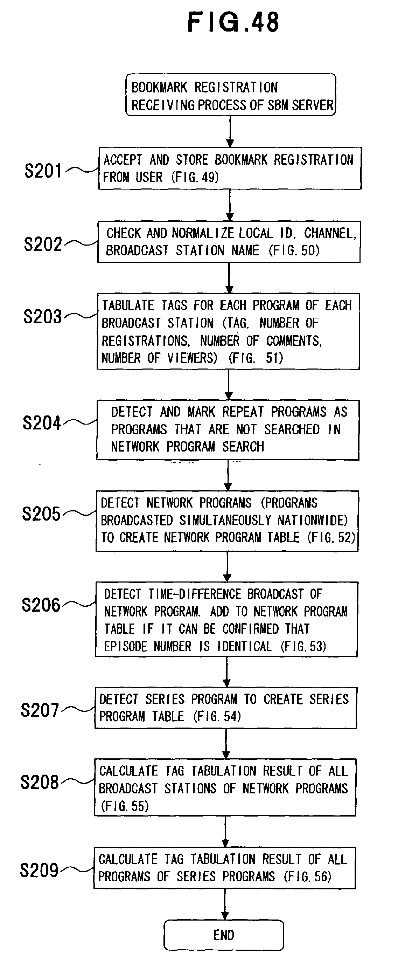

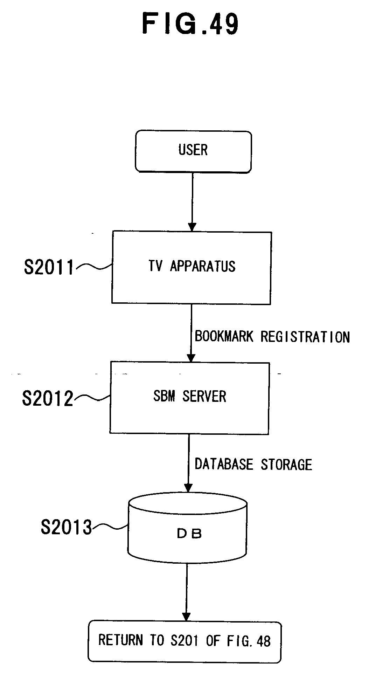

In the SBM registration receiving process of the SBM server 6, as shown in Fig. 48, the SBM registration is accepted and stored from a user for the SBM registration receiving process of the SBM server 6 (step S201). In this storage, as shown in Fig. 49, a user 8 inputs the SBM to the TV apparatus 4 (step S2011); the bookmark registration is performed in the SBM server 6 (step S2012); the SBM is registered in the SBM memory 432 of SBM server 6 and is put into a database (step S2013); and the procedure returns to step S201 of Fig. 48.

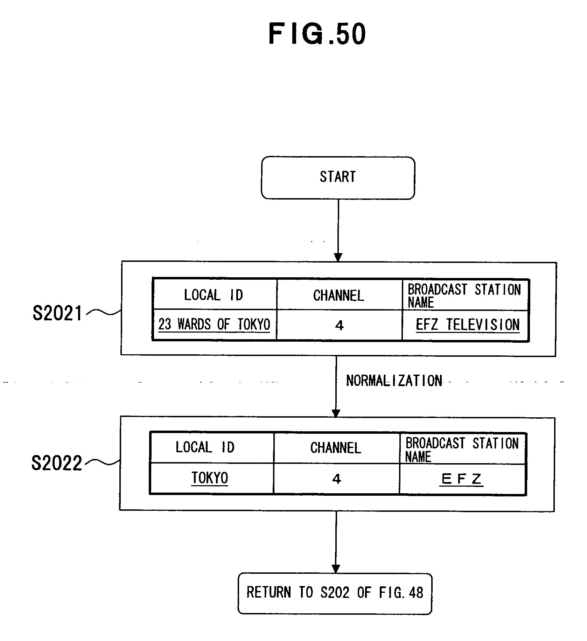

After putting into the database, the local ID, the channel, and the broadcast station name are checked and normalized (step S202). For example, as shown in Fig. 50, the local ID, the channel, and the broadcast station name are normalized (steps S2021, 2022) and the procedure returns to step S202 of Fig. 48.

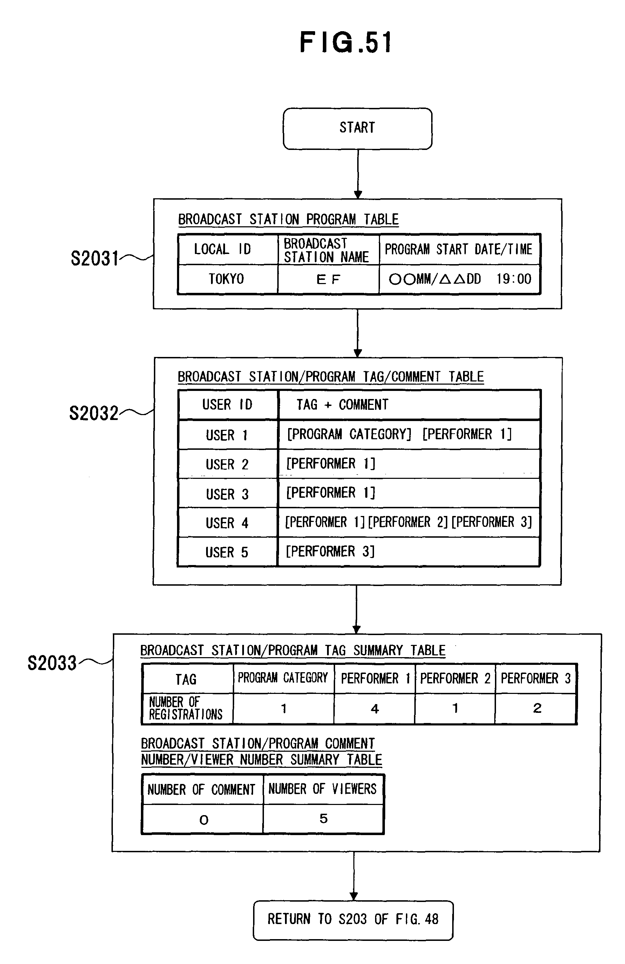

The tags are tabulated for each program of each broadcast station (step S203). In this case, the tabulation process is performed for the tag, the number of registrations, the number of comments, and the number of viewers. For example, as shown in Fig. 51, from a broadcast station program table (step S2031), a broadcast station/program tag/comment table is created (step S2032); from this broadcast station/program tag/comment table, a broadcast station/program tag summary table is generated along with a broadcast station/program comment number/viewer number summary table (step S2033); and the procedure returns to step S203 of Fig. 48.

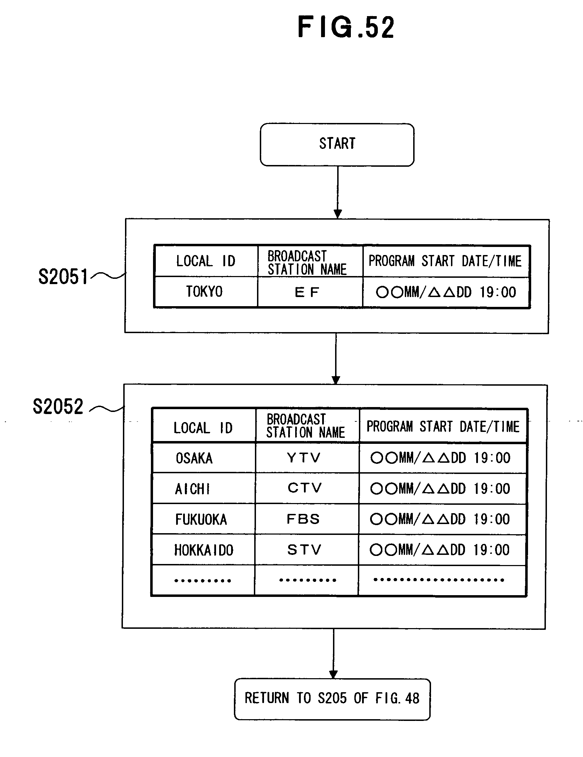

Repeat programs are detected and marked as programs that are not searched in the network program search (step S204) and the network programs (programs broadcasted simultaneously nationwide) are detected to create a network program table (step S205). For example, as shown in Fig. 52, a network program is detected (step S2051) to create the network program table (step S2052), and the procedure returns to step S205 of Fig. 48.

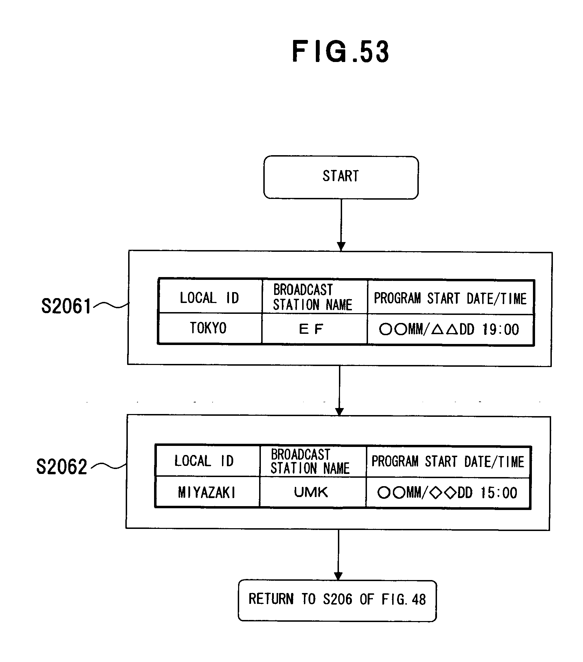

In this case, if time-difference broadcast of the network program can be detected and it can be confirmed that the episode number is identical, the program is added to the network program table (step S206). For example, as shown in Fig. 53, when the network program is detected (step S2061), if the time-difference broadcast of the network program is detected (step S2062) and it is confirmed that the episode number is identical, the program is added to the network program table (step S2052 of Fig. 52), and the procedure returns to step S206 of Fig. 48.

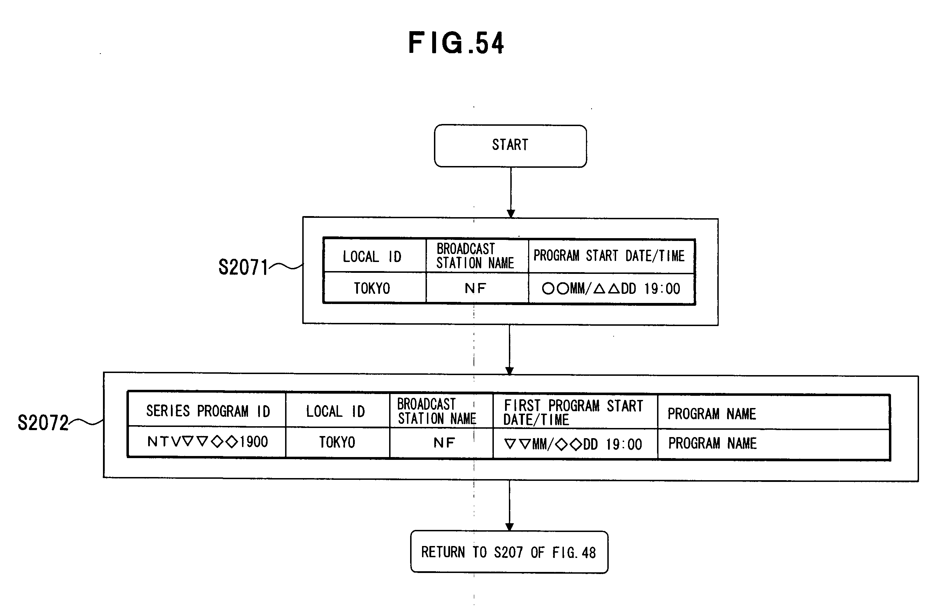

A series program is detected to create a series program table (step S207). For example, as shown in Fig. 54, the series program is detected (step S2071) to create the series program table (step S2072), and the procedure returns to step S207 of Fig. 48.

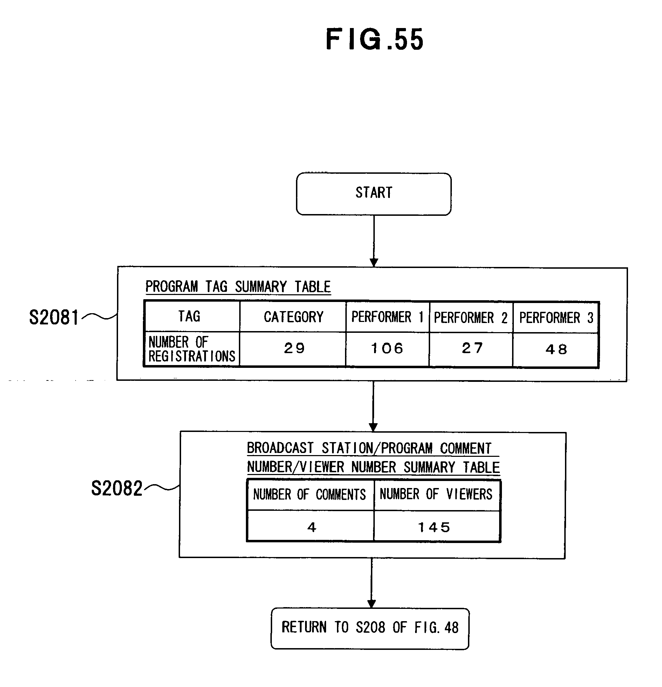

A tag tabulation result is calculated for all the broadcast stations of the network programs (step S208). For example, as shown in Fig. 55, the program tag summary table is created (step S2081); the broadcast station/program comment number/viewer number summary table is created (step S2082); and the procedure returns to step S208 of Fig. 48.

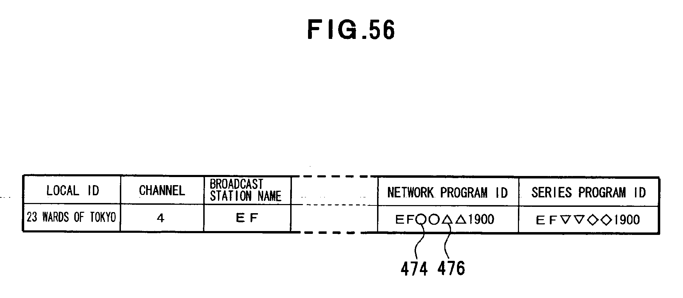

A tag tabulation result is calculated for all the programs of the series program (step S209) and if the network program or the series program is found in this case, the program is added to the bookmark registration of the user 8. For example, as shown in Fig. 56, bookmarks 474, 476 are added and this process is terminated.

### (2) SBM Reference Responding Process of SBM Server 6

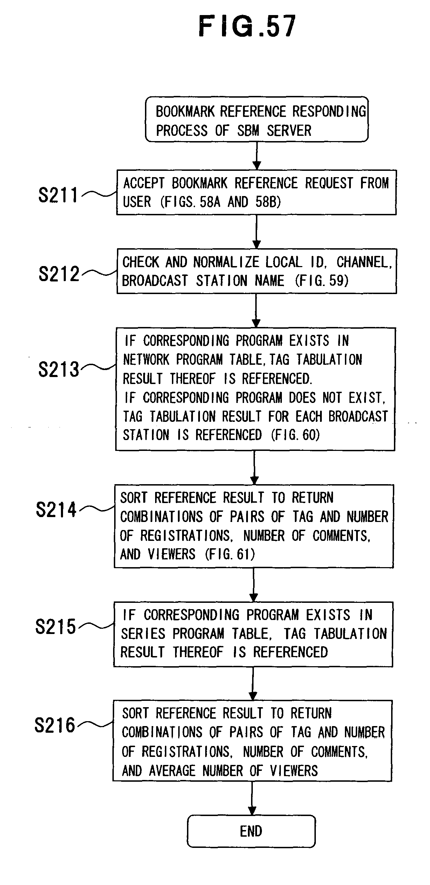

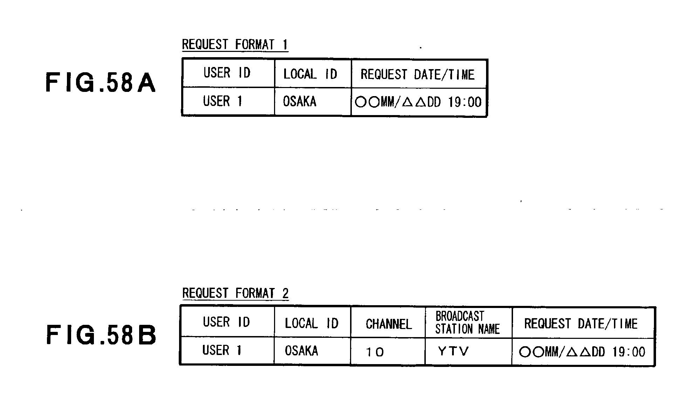

In the bookmark reference responding process of SBM server 6, for example, program data within a specified range are transmitted collectively. In this responding process, for example, as shown in Fig. 57, an SBM reference request is accepted from a user (step S211). In this case, for example, as shown in Fig. 58A, information of a predetermined time range is requested collectively in a request format 1 and, as shown in Fig. 58B, information of a certain program is requested in a request format 2.

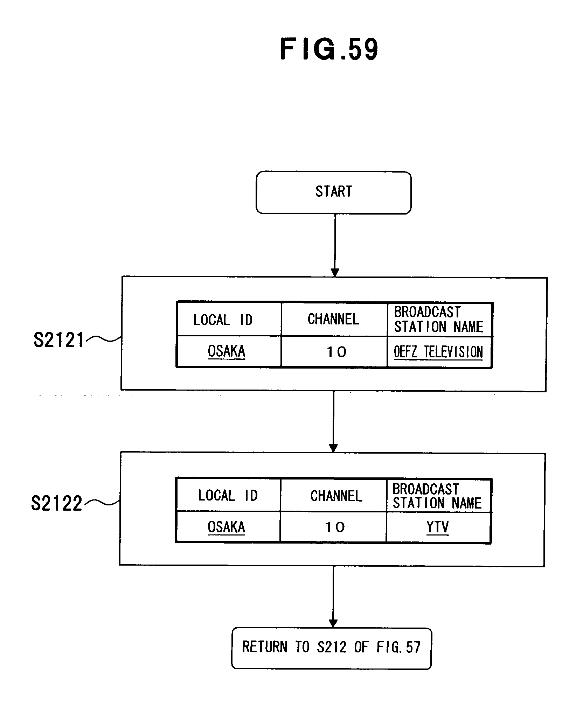

The local ID, the channel, and the broadcast station name are checked and normalized (step S212) . For example, as shown in Fig. 59, the local ID, the channel, and the broadcast station name are checked (step S2121); the local ID, the channel, and the broadcast station name are normalized (step 2122); and the procedure returns to step S212 of Fig. 57.

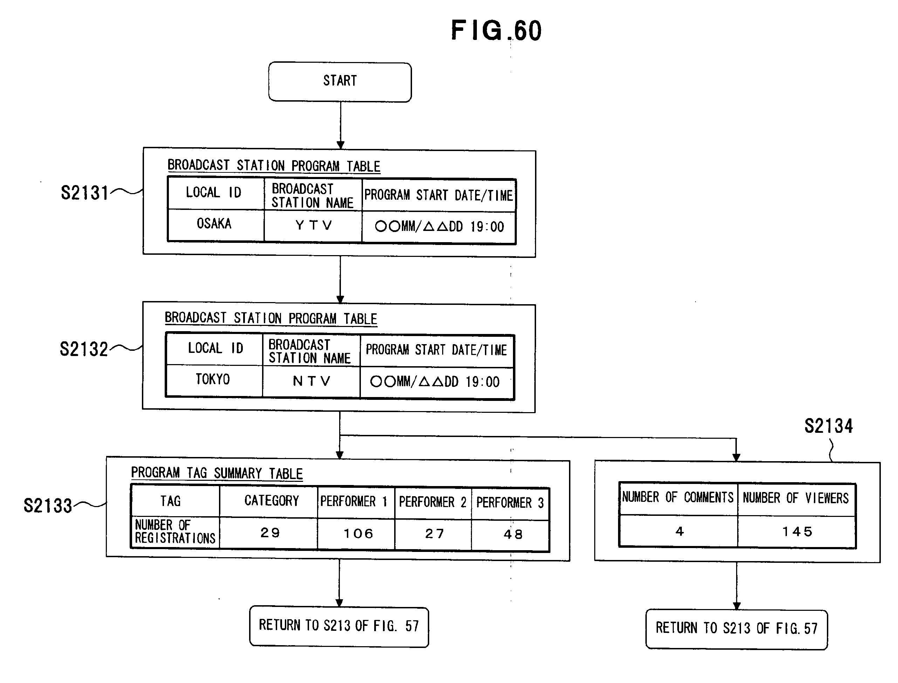

If a corresponding program exists in the network program table, the tag tabulation result thereof is referenced, and if a corresponding program does not exist in the network program table, the tag tabulation result for each broadcast station is referenced (step S213) . For example, as shown in Fig. 60, the broadcast station program table is referenced (step S2131); another broadcast station program table is also referenced (step S2132) ; the program tag summary table is referenced (step S2133); the number of comments and the number of viewers are referenced (step S2134) ; and the procedure returns to step S213 of Fig. 57.

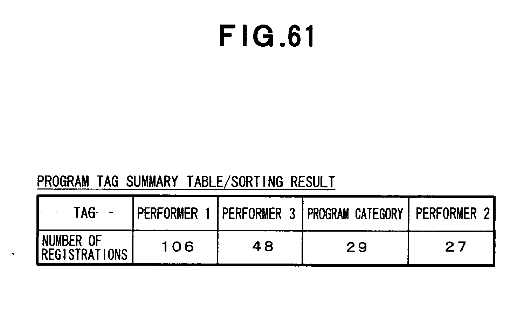

The reference result is sorted to return combinations of pairs of the tag and the number of registrations, the number of comments, and the number of viewers (step S214). For example, as shown in Fig. 61, the number of registrations of each performer is tabulated with regard to the tag registration.

If a program corresponding to the series program table exists, the tag tabulation result thereof is referenced (step S215) and the reference result is sorted to return combinations of pairs of the tag and the number of registrations, the number of comments, and the average number of viewers (step S216).

### (3) Friend Bookmark Reference Responding Process of SBM Server 6

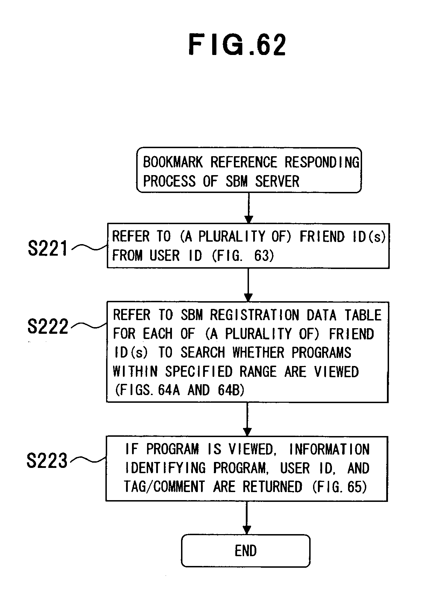

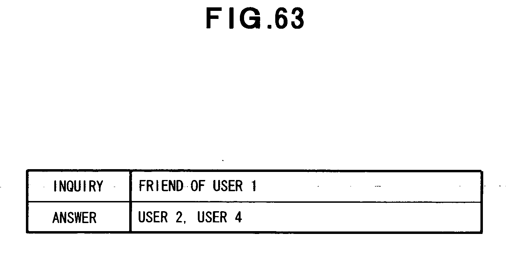

In the friend bookmark reference responding process of the SBM server 6, for example, as shown in Fig. 62, the SBM registration data table 4326 is referenced for each of (a plurality of) friend IDs (step S221). For example, as shown in Fig. 63, the user 2 and user 4 are returned to a friend of the user 1 relating to the inquiry.

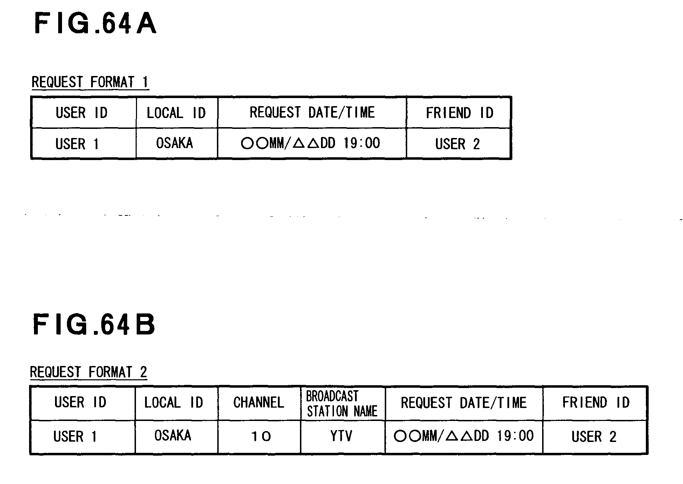

A friend is specified and the SBM registration data table 4326 is referenced to search whether the programs within the specified range are viewed or not (step S222). For example, as shown in Fig. 64A, information of a predetermined time range is requested collectively in a request format 1 and, as shown in Fig. 64B, information of a certain program is requested in a request format 2.

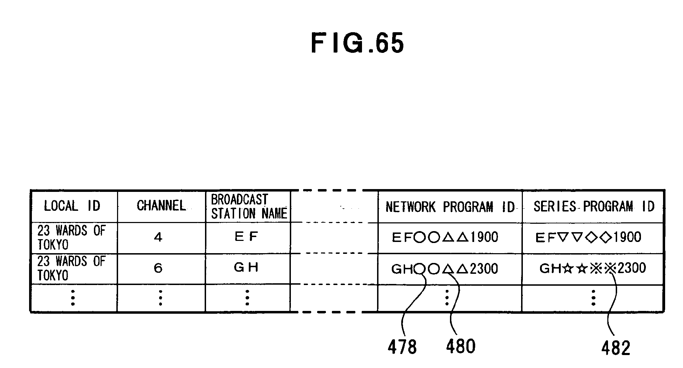

If the program is viewed, information identifying the program, the user ID, and the tag/comment are returned (step S223), and this process is terminated. For example, as shown in Fig. 65, the bookmark contents of the user 2 are returned. The bookmarks are 478, 480, 482, etc.

With regard to the collecting/browsing system 2 described above, features and modifications will be listed as follows.
(1) As described in the above embodiment, the collecting/browsing system 2 includes the TV apparatus 4 and the SBM server 6 that add the bookmark to the broadcast program to share the broadcast information and the viewer information, which are utilized for the viewing, the recording reservation, etc. By accessing the SBM server 6, the broadcast program attracting the interest of the users can be easily selected with the use of the EPG and SBM on the TV apparatus 4, and the viewer information can be shared with others (friends) through the network 7.
(2) In the collecting/browsing system 2, the SBM server 6 is provided with the information of the program viewed or recorded by the user and when the user 8 provides the viewer information to the SBM server 6, the user 8 can add the tag information presented in advance or the tag information and comment that can input arbitrarily. The SBM server 6 stores the viewer information provided from a multiplicity of the users 8, edits the viewer information along with the EPG information, etc., and provides the edition result to the TV apparatus 4 of the user 8 through the access, etc. from the user 8 via the TV apparatus 4. The TV apparatus 4 adds and displays various pieces of information provided from the SBM server 6 onto the EPG screen. The displayed contents added to the EPG information are the number of viewers, the tag information, the comment, etc., which may not only be viewed but also be recorded. The user 8 can see other viewers of the program and other programs viewed by those viewers from the number of viewers, can see other programs added with the same tag and comments of other users to the program from the tag information, and can bookmark other viewers and tag information of interest with the use of the TV apparatus 4. Other viewers (users 8) can be set to friends to share the viewer information. The contents added and displayed onto the EPG can be limited to the range of the friends and, therefore, a user will not confused by mixed pieces of information.
(3) The collecting/browsing system 2 contains an arrangement that automates provision of information such as the viewer information and the processes can be automated without forcing a cumbersome operation to the users 8.
(4) The collecting/browsing system 2 can tabulate and share the viewer information with the point of view shifted to human behavior, characteristics, preferences, human relations by selecting the viewer information or a certain user to perform the friend setting, etc. and can achieve the personalized and socialized service of the process information.
(5) Since the collecting/browsing system 2 can establish individual and human relations for a plurality of users 8 from the association of the viewer information, the collecting/browsing system 2 can be used for viewing and recording broadcast programs continuously based on the sharing of the viewer information and can optimize the selection of the broadcast programs, etc. Particularly, programs to be broadcasted can be recommended in a personalized manner.
(6) In the collecting/browsing system 2, since the SBM server 6 includes a social network function, particularly, the system can be used without registration of user information; a user can be identified with a user ID issued automatically; friends can be extracted and set automatically from similarity of the bookmark information; a handle name can be arbitrarily set; a regional name (prefecture name) can be added; and friends can be set manually with user Ids, for example.
(7) In the collecting/browsing system 2, the TV apparatus 4 can compare the bookmark information of the past one month or so for each user to automatically set a few users having higher similarity to the friends, and this setting can be reset automatically at regular intervals. The friend can be set manually with the user ID; the program reserved for recording by the friend can be manually recorded; and the friend used for determining the recorded program can be displayed. A community with a program name can be automatically established and a community with a tag name can be established automatically or manually (selected by user). When a community is automatically established, invitation letters can be automatically sent to other tag registrants.
(8) In such a collecting/browsing system 2, the user can easily learn a program popular among all the viewers on the EPG and can select and view the popular program. The user can easily learn a program popular among friends rather than all the viewers on the EPG, and the tag information can be used to check every programs of the same theme easily. Because of the tagging operation, activities of users can be expanded such that users can join the program recommendation and evaluation activities, for example.
(9) In such a collecting/browsing system 2, since the viewing or the recording of a program is recorded for each user, program promotional activities (such as present to viewers and purchase bonus for viewers) can be performed not only for viewers at the time of broadcast but also for the recording users and can be performed accurately by excluding non-viewers who get a keyword through the network, etc., and since each viewer can be supplied with advertisement and program promotion reflecting the preference thereof because of the bookmarked tags, strong effects can be achieved on publicity of programs and marketing in teleshopping programs.
(10) Although it has been described in the embodiment that the network 7 exists between the TV apparatus 4 and the SBM server 6, the TV apparatus 4 may be connected directly to the SBM server 6 and the SBM server 6 may linked to a host server through the Internet.
(11) Although the TV apparatus 4 is illustrated as the electronic apparatus including the broadcast reception function in this embodiment, the electronic apparatus of the present invention may be a cellular phone or personal computer, etc. including the broadcast reception function and is not limited to the TV apparatus.

Although the most preferred embodiment, etc. of the present invention have been described as above, the present invention is not limited the above description and can be modified and altered in many way by those who skilled in the art based on the present invention described in claims or disclosed in the specification, of course, and it is needless to say that such modifications and alterations are within the range of the present invention.

The present invention can advantageously refer to the viewer information added to the program information representing the broadcast programs or can transmit the viewer information to enable the sharing of the viewer information relating to the broadcast programs, the selection of the broadcast programs, and the exchange of the useful information relating to the broadcast programs.

## Claims

1. An electronic apparatus that includes a function for viewing or recording television broadcast, comprising:
a receiving unit that receives viewer information added to program information; and
a displaying unit that displays the viewer information received by the receiving unit.

2. The electronic apparatus of claim 1, comprising:
a processing unit that performs a process for adding and displaying the viewer information provided from viewers on electronic program information displayed on the displaying unit.

3. The electronic apparatus of claim 1 or 2, comprising:
a processing unit that selects a user correlated with the viewer information from users providing the viewer information relating to the program information to create friend information.

4. The electronic apparatus of any of the preceding claims, comprising:
a transmitting unit that transmits the viewer information that should be added to the program information.

5. The electronic apparatus of any of the preceding claims, comprising:
an electronic program information storing unit that stores the received electronic program information; and
a viewer information storing unit that stores the received viewer information.

6. The electronic apparatus of any of the preceding claims,
wherein the viewer information includes one or more of a performer of a broadcast program, a program name, a program category, a comment of a viewer, a user providing viewer information relating to a broadcast program, and the number of users.

7. The electronic apparatus of any of the preceding claims,
wherein the viewer information includes tag information that identifies a performer of a broadcast program, a program name, or a program category.

8. The electronic apparatus of any of the preceding claims, comprising:
an input unit that inputs the viewer information relating to the broadcast program.

9. An information browsing method of an electronic apparatus that includes a function for viewing or recording television broadcast, the method comprising the steps of:
receiving viewer information added to program information; and
displaying the received viewer information.

10. The information browsing method of claim 9, comprising the step of:
adding and displaying the viewer information provided from viewers on electronic program information.

11. The information browsing method of claim 9 or 10, comprising the step of:
selecting a user correlated with the viewer information from users providing the viewer information relating to the program information to create friend information.

12. The information browsing method of any of the preceding method claims, comprising the step of:
transmitting the viewer information that should be added to the program information.

13. An information browsing program of an electronic apparatus that includes a function for viewing or recording television broadcast, the program being executed by a computer, the program comprising the steps of:
receiving viewer information added to program information; and
displaying the received viewer information.

14. The program of claim 13, the program comprising the step of:
adding and displaying the viewer information provided from viewers on electronic program information.

15. The program of claim 13 or 14, the program comprising the step of:
selecting a user correlated with the viewer information from users providing the viewer information relating to the program information to create friend information.

16. The program of claim 13, 14 or 15, the program comprising the step of:
transmitting the viewer information that should be added to the program information.
